# EUROPEAN PATENT APPLICATION

(11) **EP 4 207 836 A1**
(43) Date of publication of application: **05.07.2023**
(21) Application number: 21871116.6
(22) Date of filing: 09.08.2021
(51) Int. Cl.: H04W 4/80

(54) **COMMUNICATION METHOD AND SYSTEM FOR BLUETOOTH PAIRING OF MULTIPLE DEVICES**

(30) Priority: 27.09.2020 CN 202011034685
(71) Applicant: Huawei Technologies Co., Ltd., Shenzhen, Guangdong 518129 (CN)
(72) Inventor: WANG, Liang, Shenzhen, Guangdong 518129 (CN); WANG, Jincheng, Shenzhen, Guangdong 518129 (CN); QIN, Wei, Shenzhen, Guangdong 518129 (CN)
(74) Representative: Goddar, Heinz J.
(86) International application number: PCT/CN2021/111611
(87) International publication number: WO 2022/062739

(57) **Abstract**

This application relates to a communication method and system for multi-device Bluetooth pairing. The communication system includes a first Bluetooth device, a large-screen electronic device, and a second Bluetooth device connected to the large-screen electronic device through Bluetooth. The first Bluetooth device is configured to: receive a first operation, and send Bluetooth information in response to the first operation. The second Bluetooth device is configured to: receive the Bluetooth information, and send pairing indication information to the large-screen electronic device when signal strength of the Bluetooth information is greater than or equal to a first threshold. The large-screen electronic device is configured to: receive and respond to the pairing indication information, and establish a Bluetooth connection to the first Bluetooth device. In this way, the second Bluetooth device determines whether the signal strength of the Bluetooth information sent by the first Bluetooth device is greater than or equal to the first threshold, so as to trigger a pairing connection between the large-screen electronic device and the first Bluetooth device. An operation manner is simple, and pairing efficiency of the Bluetooth device and the large-screen electronic device can be improved.

## Description

### CROSS-REFERENCE TO RELATED APPLICATIONS

This application claims priority to Chinese Patent Application No. 202011034685.3, filed with the China National Intellectual Property Administration on September 27, 2020 and entitled "COMMUNICATION METHOD AND SYSTEM FOR MULTI-DEVICE BLUETOOTH PAIRING", which is incorporated herein by reference in its entirety.

### TECHNICAL FIELD

This application relates to the field of communications technologies, and in particular, to a communication method and system for multi-device Bluetooth pairing.

### BACKGROUND

Bluetooth devices (such as a Bluetooth headset, a smartwatch, or smart glasses) are widely applied for enabling users to be free of being disturbed by wires. The Bluetooth device is mainly configured to perform a pairing connection to an electronic device, to implement a function of the electronic device by using the Bluetooth device. For example, after the Bluetooth device is paired with and connected to a mobile phone, the Bluetooth device may be used to receive an incoming call on the mobile phone, or the Bluetooth device may be used to play audio in the mobile phone.

Currently, there are increasing types of electronic devices. In addition to the foregoing portable electronic devices such as a mobile phone and a tablet computer, the electronic devices further include large-screen electronic devices, such as a large-screen computer and a large-screen television. The large-screen electronic device is usually controlled by a user by operating a remote control that matches the large-screen electronic device. In this case, when a Bluetooth device needs to perform pairing connection to the large-screen electronic device, a user who is not familiar with the large-screen electronic device may fail to enable the large-screen electronic device to be paired with and connected to the Bluetooth device because the Bluetooth device already times out and exits a pairing mode before the user finds the to-be-paired Bluetooth device.

### SUMMARY

Embodiments of this application provide a communication method and system for multi-device Bluetooth pairing, to improve pairing efficiency between a large-screen electronic device and a Bluetooth device.

According to a first aspect, a communication system for multi-device Bluetooth pairing is provided. The communication system includes a first Bluetooth device, a large-screen electronic device, and a second Bluetooth device connected to the large-screen electronic device through Bluetooth, the first Bluetooth device is configured to: receive a first operation, and send Bluetooth information in response to the first operation; the second Bluetooth device is configured to: receive the Bluetooth information; and when signal strength of the Bluetooth information is greater than or equal to a first threshold, send pairing indication information to the large-screen electronic device through the Bluetooth connection; and the large-screen electronic device is configured to: receive the pairing indication information; and establish a Bluetooth connection to the first Bluetooth device in response to the pairing indication information.

In the foregoing technical solution, the second Bluetooth device determines whether the signal strength of the Bluetooth information sent by the first Bluetooth device is greater than or equal to the first threshold, to trigger a pairing connection between the large-screen electronic device and the first Bluetooth device. An operation manner is simple, and a complex operation process of a user is omitted, so that pairing efficiency of the Bluetooth device and the large-screen electronic device can be improved.

In a possible design, the first operation is an operation of enabling a Bluetooth function of the first Bluetooth device.

In the foregoing technical solution, enabling the Bluetooth function of the first Bluetooth device may be an operation of controlling the first Bluetooth device to turn to a pairing state. A specific operation manner is not limited herein.

In a possible design, the Bluetooth information includes information about the first Bluetooth device.

In the foregoing technical solution, because the information about the first Bluetooth device is carried in the Bluetooth information, a device that receives the Bluetooth information may perform a pairing connection based on the Bluetooth information, so that a quantity of information exchanges can be reduced, and Bluetooth connection efficiency can be improved.

In a possible design, the first threshold is greater than a second threshold, and when the large-screen electronic device determines that the signal strength of the Bluetooth information is greater than or equal to the second threshold, the large-screen electronic device can receive the Bluetooth information.

In the foregoing technical solution, the large-screen electronic device may also receive the Bluetooth information. However, a condition for receiving the Bluetooth information by the large-screen electronic device is different from a condition for receiving the Bluetooth information by the second electronic device. For example, the large-screen electronic device receives the Bluetooth information when the signal strength of the Bluetooth information is greater than or equal to the second threshold, and the second Bluetooth device receives the Bluetooth information when the signal strength of the Bluetooth information is greater than or equal to the first threshold, and the first threshold is greater than the second threshold. Therefore, the first threshold used by the second Bluetooth device to discover the first Bluetooth device is lower. This can reduce a probability of false detection of the second electronic device, and can improve accuracy of a Bluetooth connection.

In a possible design, before the second Bluetooth device receives the Bluetooth information, the large-screen electronic device is further configured to send first indication information to the second Bluetooth device; and the second Bluetooth device is further configured to: receive the first indication information, and perform Bluetooth scanning in response to the first indication information.

In the foregoing technical solution, the second Bluetooth device may perform Bluetooth scanning based on an indication of the large-screen electronic device, to receive the Bluetooth information. In other words, the second Bluetooth device may not always perform Bluetooth scanning, so that power consumption of the second Bluetooth device can be reduced.

In a possible design, before the large-screen electronic device sends the first indication information, the large-screen electronic device is further configured to: receive the Bluetooth information, and generate and output first prompt information in response to the Bluetooth information, where the first prompt information is used to indicate whether to perform a Bluetooth connection to the first Bluetooth device; and receive a second operation, and send the first indication information in response to the second operation.

In the foregoing technical solution, the large-screen electronic device may determine, based on an operation of the user, whether the Bluetooth scanning function of the second Bluetooth device needs to be enabled. In other words, the user may determine, based on a requirement, whether to perform a Bluetooth connection by using the method in this embodiment of this application, so that user experience can be improved.

In a possible design, before the large-screen electronic device establishes the Bluetooth connection to the first Bluetooth device, the large-screen electronic device is further configured to: generate and output second prompt information, where the second prompt information is used to indicate whether to perform a Bluetooth connection to the first Bluetooth device; and receive a third operation, and establish the Bluetooth connection to the first Bluetooth device in response to the third operation.

In the foregoing technical solution, after the large-screen electronic device receives the pairing indication information, the large-screen electronic device may output the information about the first Bluetooth device, so that the user can choose whether to establish a Bluetooth connection to the first Bluetooth device. In this way, when a misconnection occurs, the Bluetooth connection can be detected and terminated in a timely manner, to improve accuracy of a Bluetooth connection. In addition, the user can determine, based on a requirement, whether to perform a Bluetooth connection by using the method in this embodiment of this application. This improves user experience.

In a possible design, the pairing indication information includes one or more of a name, a unique identifier, or a Bluetooth address of the first Bluetooth device.

It should be understood that the foregoing several types of information are merely examples of information included in the pairing indication message. This is not limited in this embodiment of this application.

In a possible design, after the large-screen electronic device establishes the Bluetooth connection to the first Bluetooth device, the large-screen electronic device is further configured to send second indication information to the second Bluetooth device, where the second indication information is used to indicate the second Bluetooth device to stop Bluetooth scanning.

In the foregoing technical solution, after establishing a Bluetooth connection to the first Bluetooth device, the large-screen electronic device may disable a Bluetooth scanning function of the second Bluetooth device, so that power consumption of the second Bluetooth device can be further reduced.

According to a second aspect, a communication method for multi-device Bluetooth pairing is provided. The method is applied to a communication system, the communication system includes a first Bluetooth device, a large-screen electronic device, and a second Bluetooth device, the second Bluetooth device is connected to the large-screen electronic device through Bluetooth, and the method includes:
the first Bluetooth device receives a first operation, and sends Bluetooth information in response to the first operation;
the second Bluetooth device receives the Bluetooth information, and when signal strength of the Bluetooth information is greater than or equal to a first threshold, sends pairing indication information to the large-screen electronic device through the Bluetooth connection; and
the large-screen electronic device receives the pairing indication information, and establishes a Bluetooth connection to the first Bluetooth device in response to the pairing indication information.

In a possible design, the first operation is an operation of enabling a Bluetooth function of the first Bluetooth device.

In a possible design, the Bluetooth information includes information about the first Bluetooth device.

In a possible design, the first threshold is greater than a second threshold, and when the large-screen electronic device determines that the signal strength of the Bluetooth information is greater than or equal to the second threshold, the large-screen electronic device can receive the Bluetooth information.

In a possible design, before the second Bluetooth device receives the first information, the large-screen electronic device sends first indication information to the second Bluetooth device; and the second Bluetooth device receives the first indication information, and performs Bluetooth scanning in response to the first indication information.

In a possible design, before the large-screen electronic device sends the first indication information, the large-screen electronic device receives the Bluetooth information, and generates and outputs first prompt information in response to the Bluetooth information, where the first prompt information is used to indicate whether to perform a Bluetooth connection to the first Bluetooth device; and
the large-screen electronic device receives a second operation, and sends the first indication information in response to the second operation.

In a possible design, before the large-screen electronic device establishes the Bluetooth connection to the first Bluetooth device, the large-screen electronic device generates and outputs second prompt information, where the second prompt information is used to indicate whether to perform a Bluetooth connection to the first Bluetooth device; and
the large-screen electronic device receives a third operation, and establishes the Bluetooth connection to the first Bluetooth device in response to the third operation.

In a possible design, the pairing indication information includes one or more of a name, a unique identifier, or a Bluetooth address of the first Bluetooth device.

In a possible design, after the large-screen electronic device establishes the Bluetooth connection to the first Bluetooth device, the large-screen electronic device sends second indication information to the second Bluetooth device, where the second indication information is used to indicate the second Bluetooth device to stop Bluetooth scanning.

According to a third aspect, a Bluetooth device is provided. The Bluetooth device is connected to a large-screen electronic device through Bluetooth, the apparatus may be a Bluetooth device or a chip inside the Bluetooth device, and the apparatus includes a module configured to perform the method performed by the second Bluetooth device according to any one of the second aspect or the possible designs of the second aspect.

For example, the apparatus may include:
a receiving module, configured to receive Bluetooth information sent by a first Bluetooth device; and
a sending module, configured to: when signal strength of the Bluetooth information is greater than or equal to a first threshold, send pairing indication information to the large-screen electronic device through the Bluetooth connection.

In a possible design, the Bluetooth information includes information about the first Bluetooth device.

In a possible design, the first threshold is greater than a second threshold, and when the large-screen electronic device determines that the signal strength of the Bluetooth information is greater than or equal to the second threshold, the large-screen electronic device can receive the Bluetooth information.

In a possible design, the receiving module is further configured to receive the first indication information; and the apparatus further includes an execution module, where the execution module is configured to perform Bluetooth scanning in response to the first indication information.

In a possible design, the pairing indication information includes one or more of a name, a unique identifier, or a Bluetooth address of the first Bluetooth device.

In a possible design, the receiving module is further configured to receive second indication information, where the second indication information is used to indicate the second Bluetooth device to stop Bluetooth scanning.

According to a fourth aspect, a large-screen electronic device is provided. The large-screen electronic device is connected to a second Bluetooth device through Bluetooth, and the large-screen electronic device includes a module configured to perform the method performed by the large-screen electronic device according to any one of the second aspect or the possible designs of the second aspect.

For example, the large-screen electronic device may include:
a receiving module, configured to receive pairing indication information sent by the second Bluetooth device; and
an execution module, configured to establish a Bluetooth connection to a first Bluetooth device in response to the pairing indication information.

In a possible design, when the large-screen electronic device determines that the signal strength of Bluetooth information sent by the first Bluetooth device is greater than or equal to a second threshold, the large-screen electronic device can receive the Bluetooth information.

In a possible design, the large-screen electronic device further includes a sending module, and the sending module is configured to send first indication information to the second Bluetooth device, where the first indication information is used to indicate the second Bluetooth device to perform Bluetooth scanning.

In a possible design, the receiving module is further configured to receive the Bluetooth information; the execution module is further configured to generate and output first prompt information in response to the Bluetooth information, where the first prompt information is used to indicate whether to perform a Bluetooth connection to the first Bluetooth device; the receiving module is further configured to receive a second operation; and the execution module is further configured to control, in response to the second operation, the sending module to send the first indication information.

In a possible design, the execution module is further configured to: before the large-screen electronic device establishes the Bluetooth connection to the first Bluetooth device, generate and output second prompt information, where the second prompt information is used to indicate whether to perform a Bluetooth connection to the first Bluetooth device; the receiving module is further configured to receive a third operation; and the execution module is further configured to establish the Bluetooth connection to the first Bluetooth device in response to the third operation.

In a possible design, the pairing indication information includes one or more of a name, a unique identifier, or a Bluetooth address of the first Bluetooth device.

In a possible design, the sending module is further configured to send second indication information to the second Bluetooth device, where the second indication information is used to indicate the second Bluetooth device to stop Bluetooth scanning.

According to a fifth aspect, a Bluetooth device is provided. The Bluetooth device includes at least one processor, and a memory and a communications interface that are communicatively connected to the at least one processor. The memory stores instructions that can be executed by the at least one processor, and the at least one processor executes the instructions stored in the memory, so that the Bluetooth device performs the method performed by the second Bluetooth device according to any one of the second aspect or the possible designs of the second aspect.

According to a sixth aspect, a large-screen electronic device is provided. The large-screen electronic device includes: at least one processor, and a memory and a communications interface that are communicatively connected to the at least one processor. The memory stores instructions that can be executed by the at least one processor, and the at least one processor executes the instructions stored in the memory, so that the Bluetooth large-screen electronic device performs the method performed by the large-screen electronic device according to any one of the second aspect or the possible designs of the second aspect.

According to a seventh aspect, an embodiment of this application provides a computer-readable storage medium. The computer-readable storage medium includes a program or instructions, and when the program or instructions are run on a computer, the method according to any one of the second aspect or the possible designs of the second aspect is performed.

According to an eighth aspect, a chip is provided. The chip is coupled to a memory, and is configured to read and execute program instructions stored in the memory, so that the method according to any one of the second aspect or the possible designs of the second aspect is performed.

According to a ninth aspect, a computer program product is provided, including instructions. When the instructions are run on a computer, the method according to any one of the second aspect or the possible designs of the second aspect is performed.

### BRIEF DESCRIPTION OF DRAWINGS

FIG. 1A is a schematic diagram of an example structure of a communication system according to an embodiment of this application;
FIG. 1B is a schematic diagram of another example structure of a communication system according to an embodiment of this application;
FIG. 2 is a schematic diagram of an example structure of a first Bluetooth device 100 according to an embodiment of this application;
FIG. 3 is a schematic diagram of an example structure of a large-screen electronic device 200 according to an embodiment of this application;
FIG. 4 is a schematic diagram of an example structure of a second Bluetooth device 300 according to an embodiment of this application;
FIG. 5 is a schematic diagram of an example structure of a mobile phone according to an embodiment of this application;
FIG. 6 is a flowchart of an example of a communication method for multi-device Bluetooth pairing according to an embodiment of this application;
FIG. 7 is a schematic diagram of an example of displaying a pop-up box used to indicate whether to establish a Bluetooth connection to a remote control on a display of a large-screen television according to an embodiment of this application;
FIG. 8A is a schematic diagram of an example of a state indicator of a Bluetooth headset according to an embodiment of this application;
FIG. 8B is a top view in which a Bluetooth headset is placed in a charging case and the charging case is in an opened state according to an embodiment of this application;
FIG. 9 is a schematic diagram of an example of switching a state of a Bluetooth headset according to an embodiment of this application;
FIG. 10 is a schematic diagram of another example of switching a state of a Bluetooth headset according to an embodiment of this application;
FIG. 11 is a schematic diagram of an example of outputting first prompt information on a large-screen television according to an embodiment of this application;
FIG. 12 is a schematic diagram of locations of a remote control and a Bluetooth headset according to an embodiment of this application;
FIG. 13 is a schematic diagram of an example of outputting, on a large-screen television, information prompting to change locations of a remote control and a Bluetooth headset according to an embodiment of this application;
FIG. 14 is a schematic diagram of an example of outputting pairing prompt information on a large-screen television according to an embodiment of this application;
FIG. 15 is a flowchart of another example of a communication method for multi-device Bluetooth pairing according to an embodiment of this application;
FIG. 16A is a schematic diagram of an example in which a remote control reads pairing information of a Bluetooth headset from a tag TAG according to an embodiment of this application;
FIG. 16B is a schematic diagram of another example in which a remote control reads pairing information of a Bluetooth headset from a tag TAG according to an embodiment of this application;
FIG. 17 is a flowchart of still another example of a communication method for multi-device Bluetooth pairing according to an embodiment of this application;
FIG. 18A is a schematic diagram of an example in which a mobile phone outputs information prompting a user whether to enable a function of establishing a Bluetooth connection between a large-screen television and a Bluetooth headset according to an embodiment of this application;
FIG. 18B is a schematic diagram of another example in which a mobile phone outputs information prompting a user whether to enable a function of establishing a Bluetooth connection between a large-screen television and a Bluetooth headset according to an embodiment of this application;
FIG. 19 is a schematic diagram of locations of a remote control and a mobile phone according to an embodiment of this application;
FIG. 20 is a schematic diagram of an example of outputting, on a large-screen television, information prompting to change locations of a remote control and a mobile phone according to an embodiment of this application;
FIG. 21 is a flowchart of yet another example of a communication method for multi-device Bluetooth pairing according to an embodiment of this application;
FIG. 22 is a flowchart of yet still another example of a communication method for multi-device Bluetooth pairing according to an embodiment of this application;
FIG. 23 is a schematic diagram of an example of a communication system for multi-device Bluetooth pairing according to an embodiment of this application; and
FIG. 24 is a schematic diagram of another example of a communication system for multi-device Bluetooth pairing according to an embodiment of this application.

### DESCRIPTION OF EMBODIMENTS

Technical solutions in embodiments of this application are described in detail below with reference to the accompanying drawings of the following embodiments of this application.

In a use scenario of a large-screen electronic device, a user usually operates a remote control that matches the large-screen electronic device to control the large-screen electronic device. For example, when a large-screen television needs to be connected to a Bluetooth headset through Bluetooth, an operation process of the user may be as follows:
1. The Bluetooth headset may be placed in a charging case. When the Bluetooth headset needs to be connected to the large-screen television through Bluetooth, the charging case may be opened, so that the Bluetooth headset enters a pairing mode. In this case, the Bluetooth headset may periodically send a Bluetooth broadcast, and the Bluetooth broadcast may carry pairing information of the Bluetooth headset.
2. The user operates a remote control of the large-screen television, to control the large-screen television to enter a settings user interface, finds and selects a Bluetooth option from options in the settings user interface, enables a Bluetooth function of the large-screen television, and selects a new device to be paired in a Bluetooth interface. Then, the large-screen television performs Bluetooth scanning.
3. A list of devices that can be paired and that have been scanned is displayed in a display interface of the large-screen television. For example, after the large-screen television scans and obtains a Bluetooth broadcast sent by the Bluetooth headset, information about the Bluetooth headset, for example, a name of the Bluetooth headset, is displayed in the list of devices that can be paired.
4. The user operates the remote control of the large-screen television, finds and selects the Bluetooth headset to be paired from the list of devices that can be paired, and selects an OK button, so that the large-screen television initiates a Bluetooth connection to the Bluetooth headset based on the received Bluetooth broadcast of the Bluetooth headset.

It can be learned that the foregoing process is complex, and it is possible that before the user finds the Bluetooth device to be paired, the Bluetooth device already times out and exits a pairing mode, and consequently, the large-screen electronic device cannot be paired with and connected to the Bluetooth device.

In view of this, embodiments of this application provide a communication system and method, to improve pairing efficiency between a large-screen electronic device and a Bluetooth device. In embodiments of this application, a remote control of the large-screen electronic device is used as an intermediate device, and a simple operation is performed between the Bluetooth device and the remote control, for example, the Bluetooth device is placed at a position close to the remote control, or the Bluetooth device is touched by the remote control, to trigger pairing connection between the Bluetooth device and the large-screen electronic device. An operation manner is simple, and a complex operation process of a user is omitted, so that pairing efficiency of the Bluetooth device and the large-screen electronic device can be improved.

The following describes implementations of embodiments of this application in detail with reference to the accompanying drawings.

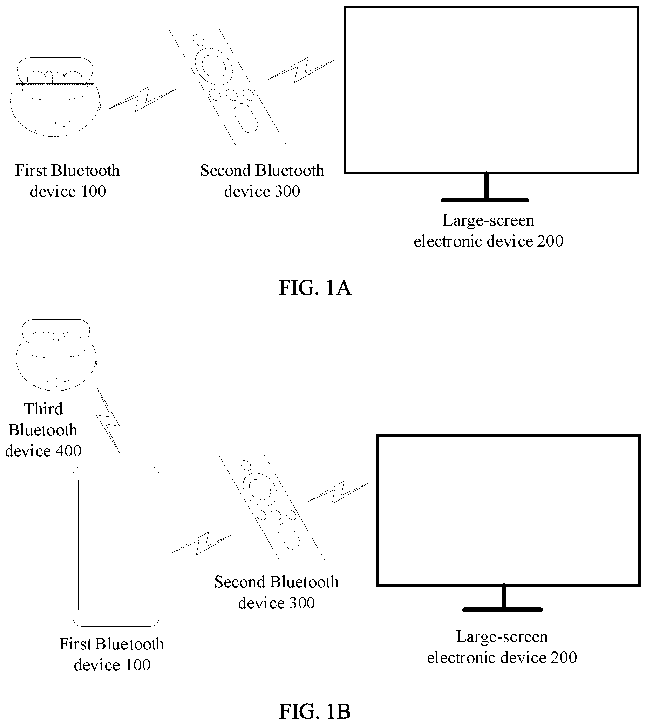

FIG. 1A is a schematic diagram of an example structure of a communication system according to an embodiment of this application. The communication system includes a first Bluetooth device 100, a large-screen electronic device 200, and a second Bluetooth device 300. The large-screen electronic device 200 and the second Bluetooth device 300 may establish a Bluetooth connection through Bluetooth. Based on the Bluetooth connection, short-range data exchange can be implemented between the large-screen electronic device 200 and the second Bluetooth device 300. The first Bluetooth device 100 may send first information, and the first information may be a Bluetooth broadcast or the like. The large-screen electronic device 200 and the second Bluetooth device 300 may receive the first information, and establish a Bluetooth connection to the first Bluetooth device 100 based on the first information.

FIG. 1B is a schematic diagram of another example structure of a communication system according to an embodiment of this application. The communication system includes a first Bluetooth device 100, a large-screen electronic device 200, a second Bluetooth device 300, and a third Bluetooth device 400. The large-screen electronic device 200 and the second Bluetooth device 300 may establish a Bluetooth connection through Bluetooth. Based on the Bluetooth connection, short-range data exchange can be implemented between the large-screen electronic device 200 and the second Bluetooth device 300. A Bluetooth connection may be established between the first Bluetooth device 100 and the third Bluetooth device 400 through Bluetooth. In addition, after establishing a Bluetooth connection to the third Bluetooth device 400, the first Bluetooth device 100 may send first information, and the first information may be a Bluetooth broadcast or the like. The large-screen electronic device 200 and the second Bluetooth device 300 may receive the first information, and establish a Bluetooth connection to the third Bluetooth device 400 based on the first information.

It should be understood that devices actually included in the communication system are not limited to the first Bluetooth device 100, the large-screen electronic device 200, the second Bluetooth device 300, and the third Bluetooth device 400 shown in FIG. 1A or FIG. 1B, and may further include more devices. This is not limited herein.

The following describes some terms in embodiments of this application, to facilitate understanding of a person skilled in the art.

In some embodiments, for example, in the communication system shown in FIG. 1A, the first Bluetooth device in this embodiment of this application may be a Bluetooth headset, a smartwatch, or another wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

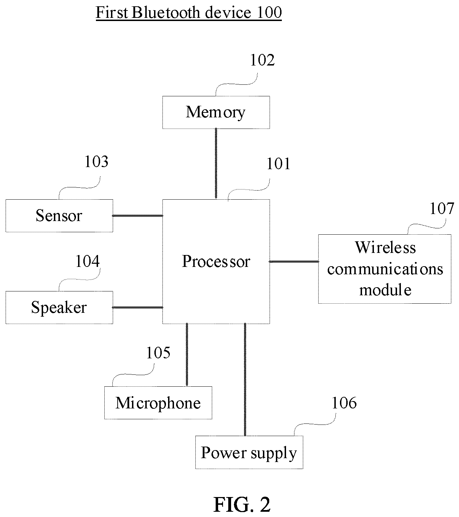

FIG. 2 is a schematic diagram of an example structure of a first Bluetooth device 100 according to an embodiment of this application. As shown in FIG. 2, the first Bluetooth device 100 may include: a processor 101, a memory 102, a sensor 103, at least one speaker 104, at least one microphone 105, a power supply 106, a wireless communications module 107, and the like.

The memory 102 may be configured to store application program code, where the application program code may include startup application program code of the Bluetooth device, application program code that enables the Bluetooth device to perform a Bluetooth connection to another electronic device, and the like. The processor 101 may execute the foregoing application program code, to implement functions that can be provided by the Bluetooth device in this embodiment. For example, the processor 101 may execute the startup application program code of the Bluetooth device, and after receiving, by using the wireless communications module 107, a pairing message sent by the another electronic device, implement a function of wirelessly connecting the Bluetooth device to the another electronic device.

The memory 102 may further store identification information used to uniquely identify the Bluetooth device. For example, when the another electronic device needs to perform identity authentication on the Bluetooth device, the identification information may be obtained from the memory 102, or the identification information may be sent to the another electronic device, so that the another electronic device may initiate a wireless connection to the Bluetooth device based on the identification information. In an example, a specific form of the identification information is related to the wireless communications module 107. For example, when the wireless communications module 107 is a Bluetooth module, the identification information may be a Bluetooth address, for example, may be a media access control (media access control, MAC) address. When the wireless communications module 107 is another type of communications module, the identification information may alternatively be other information, which is described in content of the wireless communications module 107 subsequently. In addition, the memory 102 may further store connection data of another electronic device that has been successfully paired with the Bluetooth device before. For example, the connection data may be identification information of the electronic device that has been successfully paired with the Bluetooth device, and the identification information may include a Bluetooth address, a name of the electronic device, and the like. In this way, after the Bluetooth device is powered on, the Bluetooth device may be automatically paired with the electronic device based on the connection data.

The sensor 103 may be an optical proximity sensor. The processor 101 of the first Bluetooth device 100 may determine, by using the sensor 103, whether the first Bluetooth device 100 is worn by a user. For example, the processor 101 of the Bluetooth device may detect, by using the optical proximity sensor, whether there is an object near the Bluetooth device, to determine whether the Bluetooth device is worn by the user. Alternatively, if the Bluetooth device is charged in a charging case, the processor 101 of the Bluetooth device may determine, by using the optical proximity sensor, whether the charging case of the Bluetooth device is opened, to determine whether to control the Bluetooth device to be in a pairing state. In addition, in some embodiments, the Bluetooth device may further include a bone conduction sensor. The bone conduction sensor may obtain a vibration signal of a vibration bone block of an acoustic part, and the processor 101 parses and obtains a voice signal, to implement a control function corresponding to the voice signal. In some other embodiments, the first Bluetooth device 100 may further include a touch sensor or a pressure sensor, to detect a touch operation and a press operation of the user on the Bluetooth device. In some other embodiments, the Bluetooth device may further include a fingerprint sensor, configured to detect a user fingerprint, identify a user identity, and the like.

The speaker 104 may be configured to convert an audio electrical signal into a sound signal and play the sound signal. For example, after the first Bluetooth device 100 is connected to a smartphone, the speaker 104 may be used as an audio output device of the smartphone, so as to convert an audio electrical signal sent by a network side to the smartphone into a sound signal and play the sound signal. Alternatively, the speaker 104 may convert an audio electrical signal received from the smartphone (for example, an audio electrical signal in a video played by the smartphone) into a sound signal and play the sound signal.

The microphone 105, also referred to as "mike" and "mic", is configured to convert a sound signal into an audio electrical signal. For example, after the first Bluetooth device 100 is connected to the smartphone, the first Bluetooth device 100 may be used as an audio input device of the smartphone. When the user speaks (for example, makes a call or sends a voice message), the microphone 105 may collect a sound signal of the user, and convert the sound signal into an audio electrical signal. It should be understood that the audio electrical signal is audio data in embodiments of this application.

The power supply 106 may be configured to supply power to each component included in the Bluetooth device. In some embodiments, the power supply 106 may be a battery, for example, a rechargeable battery.

The wireless communications module 107 is configured to establish a wireless connection to another electronic device, so that the first Bluetooth device 100 can exchange data with the another electronic device. In some embodiments, the wireless communications module 107 may be a near field communication (near field communication, NFC) module, so that the first Bluetooth device 100 can perform near field communication with another electronic device having an NFC module. The NFC module may store related information of the first Bluetooth device 100. For example, the NFC module may store a name, address information, or a unique identifier of the first Bluetooth device 100. In this way, another electronic device having an NFC module may establish an NFC connection to the first Bluetooth device 100 based on the related information, and transmit data based on the NFC connection. In some other embodiments, the wireless communications module 107 may alternatively be a Bluetooth module. The Bluetooth module stores a Bluetooth address of the first Bluetooth device 100, so that another electronic device can establish a Bluetooth connection to the first Bluetooth device 100 based on the Bluetooth address, and transmit audio data and the like through the Bluetooth connection. In this embodiment of this application, the Bluetooth module may simultaneously support a plurality of Bluetooth connection types, for example, a serial port protocol (serial port profile, SPP) in a conventional Bluetooth technology or a Bluetooth low energy (Bluetooth low energy, BLE) general attribute configuration protocol (Generic Attribute Profile, GATT). This is not limited herein.

In some other embodiments, the wireless communications module 107 may alternatively be an infrared module, wireless fidelity (wireless fidelity, Wi-Fi), or the like. A specific implementation of the wireless communications module 107 is not limited herein.

In addition, in this embodiment of this application, only one wireless communications module 107 may be disposed, or a plurality of wireless communications modules 107 may be disposed based on a requirement. For example, two wireless communications modules may be disposed in the first Bluetooth device 100. One wireless communications module is a Bluetooth module, and the other wireless communications module is an NFC module. In this way, the first Bluetooth device 100 may separately perform data communication by using the two wireless communications modules. A quantity of wireless communications modules 107 is not limited herein.

It may be understood that the structure shown in this embodiment does not constitute a specific limitation on the first Bluetooth device 100. The first Bluetooth device 100 may have more or fewer components than those shown in FIG. 2, or may combine two or more components, or may have different component configurations. For example, the first Bluetooth device 100 further includes components such as an indicator (which may indicate a state such as a battery level) and a dust filter (which may be used with the earpiece). Various components shown in FIG. 2 may be implemented in hardware, software, or a combination of hardware and software that includes one or more signal processing or application-specific integrated circuits.

The large-screen electronic device in embodiments of this application may be a large-screen television, a large-screen computer, a large-screen mobile Internet device (mobile Internet device, MID), a large-screen vehicle-mounted device, a large-screen virtual reality (virtual reality, VR) device, a large-screen augmented reality (augmented reality, AR) device, a large-screen smart home device, or the like, or may be another device that can establish a wireless communication connection. This is not limited herein. The large-screen electronic device may carry an iOS^{®}, an Android^{®}, a Microsoft^{®}, or another operating system. This is not limited in this embodiment of this application.

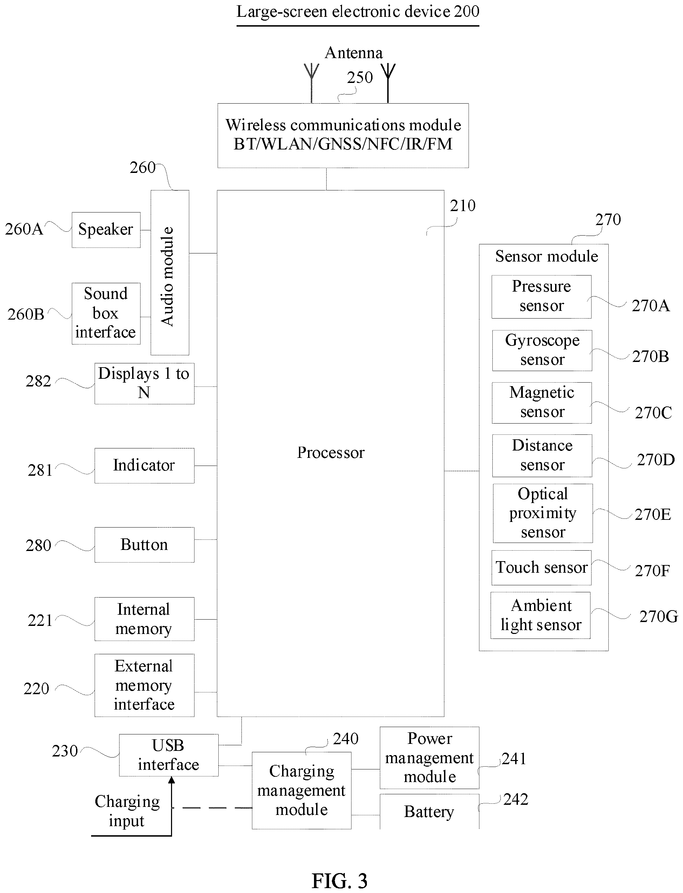

FIG. 3 is a schematic diagram of an example structure of a large-screen electronic device 200 according to an embodiment of this application. The large-screen electronic device 200 may include a processor 210, an external memory interface 220, an internal memory 221, a universal serial bus (universal serial bus, USB) interface 230, a charging management module 240, a power management module 241, a battery 242, an antenna, a wireless communications module 250, an audio module 260, a speaker 260A, a sound box interface 260B, a sensor module 270, a button 280, an indicator 281, a display 282, and the like. The sensor module 270 may include a pressure sensor 270A, a gyroscope sensor 270B, a magnetic sensor 270C, a distance sensor 270D, an optical proximity sensor 270E, a touch sensor 270F, an ambient light sensor 270G, and the like.

It may be understood that the schematic structure in this embodiment of the present invention does not constitute a specific limitation on the large-screen electronic device 200. In some other embodiments of the present invention, more or fewer components than those shown in the figure may be included in the large-screen electronic device 200, or some components are combined, or some components are split, or different component arrangements are included. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the large-screen electronic device 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The processor 210 may control execution of application program code, to implement a function of the large-screen electronic device 200 in this embodiment. For example, after receiving, by using the wireless communications module 250, a Bluetooth broadcast sent by the first Bluetooth device 100, the large-screen electronic device 200 sends, in response to the Bluetooth broadcast, indication information used to obtain pairing information of the first Bluetooth device 100 to a remote control of the large-screen electronic device 200; and after receiving pairing information sent by the remote control of the large-screen electronic device 200, controls, based on the pairing information, the large-screen electronic device 200 to initiate a Bluetooth connection to the first Bluetooth device 100, so as to implement data transmission between the large-screen electronic device 200 and the first Bluetooth device 100 based on the Bluetooth connection.

The USB interface 230 is an interface that conforms to a USB standard specification, and may be specifically a mini USB interface, a micro USB interface, a USB Type-C interface, or the like. The USB interface 230 may be configured to connect to a charger to charge the large-screen electronic device 200, or may be configured to transmit data between the large-screen electronic device 200 and a peripheral device. The USB interface can also be used to connect to a sound box to play audio. The interface may be further configured to connect to another electronic device such as an AR device.

It may be understood that an interface connection relationship between the modules shown in embodiments of the present invention is merely an example for description, and does not constitute a limitation on the structure of the large-screen electronic device 200. In some other embodiments of the present invention, the large-screen electronic device 200 may alternatively use an interface connection manner different from the interface connection manner in the foregoing embodiment, or a combination of a plurality of interface connection manners.

The charging management module 240 is configured to receive charging input from a charger. The charger may be a wireless charger or a wired charger. In some embodiments of wired charging, the charging management module 240 may receive charging input of a wired charger through the USB interface 230. In some embodiments of wireless charging, the charging management module 240 may receive wireless charging input by using a wireless charging coil of the large-screen electronic device 200. When charging the battery 242, the charging management module 240 may further supply power to the large-screen electronic device 200 by using the power management module 241.

The power management module 241 is configured to connect to the battery 242, the charging management module 240, and the processor 210. The power management module 241 receives input of the battery 242 and/or the charging management module 240, and supplies power to the processor 210, the internal memory 221, the external memory, the display 282, the wireless communications module 250, and the like. The power management module 241 may be further configured to monitor parameters such as a battery capacity, a battery cycle count, and a battery health state (an electric leakage or impedance). In some other embodiments, the power management module 241 may alternatively be disposed in the processor 210. In some other embodiments, the power management module 241 and the charging management module 240 may alternatively be disposed in a same device.

A wireless communication function of the large-screen electronic device 200 may be implemented by using the antenna, the wireless communications module 250, the modem processor, the baseband processor, and the like.

The antenna is configured to transmit and receive an electromagnetic wave signal. Each antenna in the large-screen electronic device 200 may be configured to cover one or more communication frequency bands. Different antennas may be further multiplexed, to improve antenna utilization. For example, one of the plurality of antennas may be multiplexed as a diversity antenna of a wireless local area network. In some other embodiments, the antenna may be used in combination with a tuning switch.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using the audio module 260 (not limited to the speaker 260A, the sound box interface 260B, or the like), or displays an image or a video by using the display 282. In some embodiments, the modem processor may be an independent component. In some other embodiments, the modem processor may be independent of the processor 210, and is disposed in a same component as the wireless communications module 250 or another function module.

The wireless communications module 250 may provide a wireless communication solution that is applied to the large-screen electronic device 200 and that includes Bluetooth (Bluetooth, BT), a wireless local area network (wireless local area networks, WLAN) (such as a wireless fidelity (wireless fidelity, Wi-Fi) network), a global navigation satellite system (global navigation satellite system, GNSS), frequency modulation (frequency modulation, FM), a near-field wireless communications technology (near field communication, NFC), and an infrared technology (infrared, IR). The wireless communications module 250 may be one or more components integrating at least one communications processing module. The wireless communications module 250 receives an electromagnetic wave through an antenna, performs frequency modulation and filtering processing on the electromagnetic wave signal, and sends the processed signal to the processor 210. The wireless communications module 250 may further receive a to-be-sent signal from the processor 210, perform frequency modulation and amplification on the signal, and convert, through the antenna, the signal into an electromagnetic wave for radiation.

The large-screen electronic device 200 implements a display function by using the GPU, the display 282, the application processor, and the like. The GPU is a microprocessor for image processing, and is connected to the display 282 and the application processor. The GPU is configured to: perform mathematical and geometric computation, and render an image. The processor 210 may include one or more GPUs that execute program instructions to generate or change display information.

The display 282 is configured to display an image, a video, and the like. For example, after the large-screen electronic device 200 receives the pairing information of the first Bluetooth device 100 that is sent by the remote control, the display 282 displays the pairing information, and prompts the user whether to establish a Bluetooth connection to the first Bluetooth device 100. If the large-screen electronic device 200 receives an operation performed by the user to indicate to establish a Bluetooth connection to the first Bluetooth device 100, corresponding to the operation, the large-screen electronic device 200 displays, on the display 282, an interface for establishing a Bluetooth connection to the first Bluetooth device 100.

The display 282 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot-light emitting diode, QLED), or the like. In some embodiments, the large-screen electronic device 200 may include one or more display screens 282, for example, may include two or four or N display screens 282, where N is a positive integer greater than 4.

The external memory interface 220 may be configured to connect to an external memory card, for example, a Micro SD card, to extend a storage capability of the large-screen electronic device 200. The external memory card communicates with the processor 210 through the external memory interface 220, to implement a data storage function. For example, files such as music and videos are stored in the external memory card.

The internal memory 221 may be configured to store computer-executable program code. The executable program code includes instructions. The processor 210 executes various function applications and data processing of the large-screen electronic device 200 by running the instructions stored in the internal memory 221. The internal memory 221 may include a program storage area and a data storage area. The program storage area may store an operating system, an application required by at least one function (for example, a voice playing function or an image playing function), and the like. The data storage area may store data (such as audio data and a phone book) created in a process of using the large-screen electronic device 200, and the like. In addition, the internal memory 221 may include a high-speed random access memory, and may further include a non-volatile memory, for example, at least one magnetic disk storage device, a flash memory device, or a universal flash storage (universal flash storage, UFS).

The large-screen electronic device 200 may implement an audio function by using the audio module 260, the speaker 260A, the sound box interface 260B, the application processor, and the like.

The audio module 260 is configured to convert digital audio information into an analog audio signal for output, and is also configured to convert analog audio input into a digital audio signal. The audio module 260 may be further configured to code and decode an audio signal. In some embodiments, the audio module 260 may be disposed in the processor 210, or some function modules in the audio module 260 are disposed in the processor 210.

The speaker 260A, also referred to as a "loudspeaker", is configured to convert an audio electrical signal into a sound signal. The large-screen electronic device 200 may listen to music or audio by using the speaker 260A. For example, after the large-screen electronic device 200 establishes a Bluetooth connection to the first Bluetooth device 100, the speaker 260A may play voice data transmitted by the first Bluetooth device 100 through Bluetooth.

The button 280 includes a power button, a volume button, and the like. The button 280 may be a mechanical button, or a touch button. The large-screen electronic device 200 may receive a button input, and generate a button signal input related to a user setting and function control of the large-screen electronic device 200.

The indicator 281 may be an indicator, and may be configured to indicate a charging state and a battery level change, or may be configured to indicate a message, a state of a connection to the first Bluetooth device 100, a notification, or the like.

The second Bluetooth device in embodiments of this application may be a remote control, for example, a touch remote control or a button remote control, or may be another device that can operate a large-screen electronic device. This is not limited herein. The remote control may be matched with the large-screen electronic device, which may be understood as that the large-screen electronic device can be controlled only by using a specified remote control, or the remote control may be a general-purpose remote control, which may be understood as that the remote control may control all large-screen electronic devices, which is not limited herein.

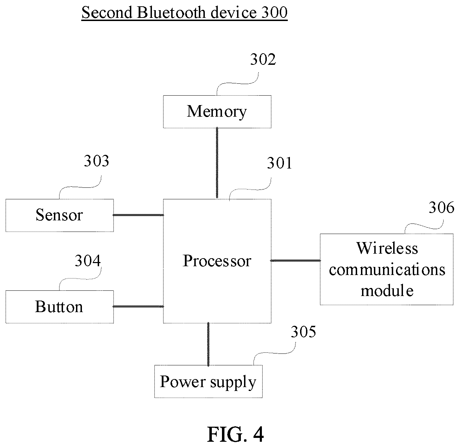

FIG. 4 is a schematic diagram of an example structure of a second Bluetooth device 300 according to an embodiment of this application. The second Bluetooth device 300 may include a processor 301, a memory 302, a sensor 303, a button 304, a power supply 305, a wireless communications module 306, and the like. It may be understood that the structure shown in this embodiment of the present invention does not constitute a specific limitation on the second Bluetooth device 300. In some other embodiments of the present invention, more or fewer components than those shown in the figure may be included in the second Bluetooth device 300, or some components are combined, or some components are split, or different component arrangements are included. The components shown in the figure may be implemented by hardware, software, or a combination of software and hardware.

The processor 301 may include one or more processing units. For example, the processor 301 may include an application processor AP, a modem processor, a controller, a memory, a digital signal processor (digital signal processor, DSP), a baseband processor, and the like. Different processing units may be independent components, or may be integrated into one or more processors.

The controller may be a nerve center and a command center of the second Bluetooth device 300. The controller may generate an operation control signal based on an instruction operation code and a time sequence signal, to complete control of instruction reading and instruction execution.

A memory may be further disposed in the processor 301, and is configured to store instructions and data. In some embodiments, the memory in the processor 301 is a buffer memory. The memory may store instructions or data just used or cyclically used by the processor 301. If the processor 301 needs to use the instructions or the data again, the processor may directly invoke the instructions or the data from the memory.

In some embodiments, the processor 301 may include one or more interfaces. The interface may include an inter-integrated circuit (inter-integrated circuit, I2C) interface, a pulse code modulation (pulse code modulation, PCM) interface, a universal asynchronous receiver/transmitter (universal asynchronous receiver/transmitter, UART) interface, a general-purpose input/output (general-purpose input/output, GPIO) interface, a universal serial bus (universal serial bus, USB) interface, and/or the like.

The processor 301 may control execution of the application program code, to implement a function of the second Bluetooth device 300 in this embodiment. For example, after receiving, by using the wireless communications module 306, a Bluetooth broadcast sent by the large-screen television 200, the second Bluetooth device 300 establishes a Bluetooth connection to the large-screen electronic device 200 in response to the Bluetooth broadcast; and after receiving indication information that is sent by the large-screen electronic device 200 and that is used to obtain pairing information of the first Bluetooth device 100, obtains pairing information of the first Bluetooth device 100 based on the indication information, and sends the pairing information to the large-screen electronic device 200, to implement a Bluetooth connection between the large-screen electronic device 200 and the first Bluetooth device 100.

The memory 302 may be configured to store computer-executable program code, and the executable program code includes instructions. The processor 301 executes various function applications and data processing of the second Bluetooth device 300 by running the instructions stored in the memory 302. The memory 302 may include a program storage area. The program storage area may store an operating system, an application program required by at least one function (for example, a key control function), and the like. The memory 302 may further include a data storage area. The data storage area may store the pairing information of the first Bluetooth device 100 obtained by the second Bluetooth device 300. The pairing information may be identification information that uniquely identifies the first Bluetooth device 100, for example, may be a Bluetooth address or a Bluetooth device name. The memory 302 may further store identification information of the large-screen electronic device 200 that has been successfully paired with the second Bluetooth device 300, for example, a name and a Bluetooth address of the large-screen electronic device 200. In this way, after the large-screen electronic device 200 is powered on, the second Bluetooth device 300 may be automatically paired with the large-screen electronic device 100 based on the identification information.

The sensor 303 may be an optical proximity sensor. The processor 301 of the second Bluetooth device 300 may determine, by using the sensor 303, whether there is an object near the second Bluetooth device 300, to determine whether the first Bluetooth device 100 is close to the second Bluetooth device 300. Alternatively, the sensor 303 may be a distance sensor, and the processor 301 of the second Bluetooth device 300 may determine a distance between the second Bluetooth device 300 and the first Bluetooth device 100 by using the sensor 303. In some embodiments, the sensor 303 may alternatively be a touch sensor or a pressure sensor, and is separately configured to detect a touch operation and a press operation of a user on the second Bluetooth device 300. In some other embodiments, the sensor 303 may alternatively be a fingerprint sensor, configured to detect a user fingerprint, identify a user identity, and the like.

The button 304 includes a power button, a volume button, a direction selection button, and the like. The button 304 may be a mechanical button, or a touch button. The second Bluetooth device 300 may receive a button input, and generate a button signal input related to function control of the second Bluetooth device 300.

The power supply 305 may be configured to supply power to components included in the second Bluetooth device 300. In some embodiments, the power supply 306 may be a battery, for example, a rechargeable battery.

The wireless communications module 306 is configured to establish a wireless connection to another electronic device (for example, the large-screen electronic device 200), so that the first Bluetooth device 100 can exchange data with the another electronic device. In some embodiments, the wireless communications module 306 may be an NFC module, so that the second Bluetooth device 300 may perform near field communication with another electronic device (for example, a Bluetooth headset) having an NFC module. The another electronic device having an NFC module may store related information of the electronic device, for example, a name and address information of the electronic device. In this way, the NFC module of the second Bluetooth device 300 may read the related information from the NFC module of the electronic device, to send the related information to the large-screen electronic device 200. In some other embodiments, the wireless communications module 306 may alternatively be a Bluetooth module. The Bluetooth module stores a Bluetooth address of the second Bluetooth device 300, so that the large-screen electronic device can establish a Bluetooth connection to the second Bluetooth device 300 based on the Bluetooth address, and transmit data and the like by using the Bluetooth connection. In this embodiment of this application, the Bluetooth module may simultaneously support a plurality of Bluetooth connection types, for example, SPP, BLE, or GATT. This is not limited herein.

In some other embodiments, the wireless communications module 306 may alternatively be an infrared module, Wi-Fi, or the like. A specific implementation of the wireless communications module 306 is not limited herein.

In addition, in this embodiment of this application, only one wireless communications module 306 may be disposed, or a plurality of wireless communications modules 306 may be disposed based on a requirement. For example, two wireless communications modules may be disposed in the second Bluetooth device 300. One wireless communications module is a Bluetooth module, and the other wireless communications module is an NFC module. In this way, the second Bluetooth device 300 may separately perform data communication by using the two wireless communications modules. A quantity of wireless communications modules 306 is not limited herein.

It may be understood that the structure shown in this embodiment does not constitute a specific limitation on the second Bluetooth device 300. The second Bluetooth device 300 may have more or fewer components than those shown in FIG. 3, or may combine two or more components, or may have different component configurations. For example, the second Bluetooth device 300 further includes a component such as an indicator (which may indicate a state such as a battery level or a button input). Various components shown in FIG. 3 may be implemented in hardware, software, or a combination of hardware and software that includes one or more signal processing or application specific integrated circuits.

In some embodiments, for example, in the communication system shown in FIG. 1B, the first Bluetooth device 100 in this embodiment of this application may be a mobile phone.

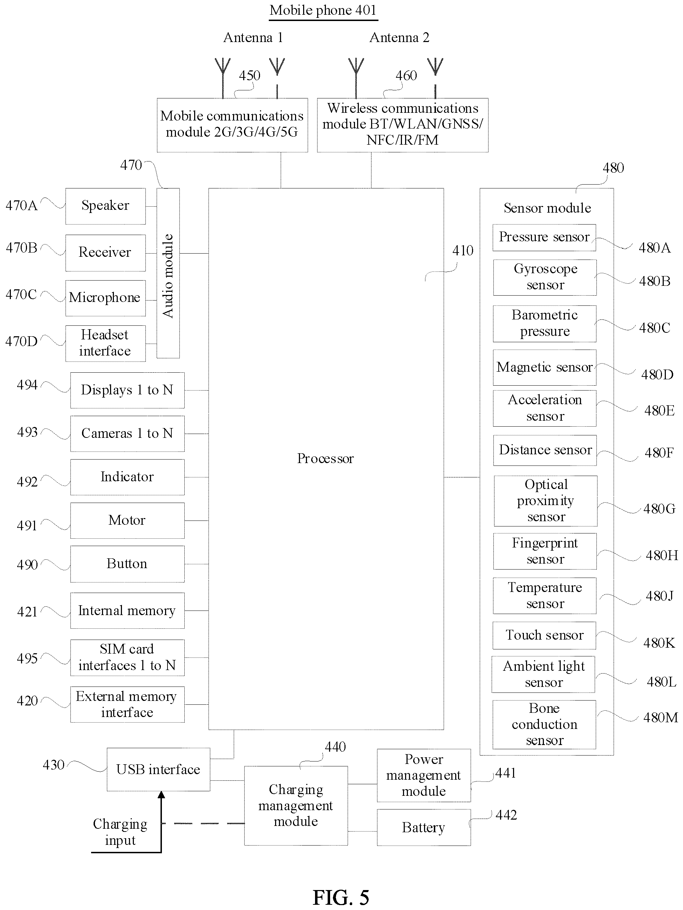

FIG. 5 is a schematic diagram of an example structure of a mobile phone according to an embodiment of this application. The mobile phone 401 may include a processor 410, an external memory interface 420, an internal memory 421, a universal serial bus (universal serial bus, USB) interface 430, a charging management module 440, a power management module 441, a battery 442, an antenna 1, an antenna 2, a mobile communications module 450, a wireless communications module 460, an audio module 470, a speaker 470A, a receiver 470B, a microphone 470C, a headset interface 470D, a sensor module 480, a button 490, and a motor 491, an indicator 492, a camera 493, a display 494, a subscriber identity module (subscriber identity module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It can be understood that the structure shown in this embodiment of the present invention does not constitute a specific limitation on the mobile phone 401. In some other embodiments of the present invention, more or fewer components than those shown in the figure may be included in the mobile phone 401, or some components are combined, or some components are split, or different component arrangements are included. The components shown in the figure may be implemented by hardware, software, or a combination of software and hardware.

The processor 410 may include one or more processing units. The processor 410 may be similar to the processor 210 in FIG. 3. Details are not described herein again. In some embodiments, the processor 410 may control execution of the application program code, to implement a function of the mobile phone in this embodiment. For example, after receiving a Bluetooth broadcast sent by the third Bluetooth device 400, the mobile phone 401 controls, in response to the Bluetooth broadcast, the mobile phone 401 to establish a Bluetooth connection to the third Bluetooth device 400. After establishing the Bluetooth connection to the third Bluetooth device 400, the mobile phone 401 may send instructions or data to the third Bluetooth device 400, so as to achieve an effect that a user controls the third Bluetooth device 400 by using the mobile phone.

The USB interface 430, the charging management module 440, the power management module 441, the battery 442, the antenna 1, the antenna 2, the wireless communications module 460, the audio module 470, the speaker 470A, the sensor module 480, the button 490, the indicator 492, and the display 494 are respectively similar to corresponding components in FIG. 3. Details are not described herein again.

The mobile communications module 450 may provide a wireless communication solution that is applied to the mobile phone 401 and that includes 2G/3G/4G/5G and the like. The mobile communications module 450 may include at least one filter, a switch, a power amplifier, a low noise amplifier (low noise amplifier, LNA), and the like. The mobile communications module 450 may receive an electromagnetic wave through the antenna 1, perform processing such as filtering and amplification on the received electromagnetic wave, and transmit a processed electromagnetic wave to a modem processor for demodulation. The mobile communications module 450 may further amplify a signal obtained after modulation by the modem processor, and convert the signal into an electromagnetic wave through the antenna 1 for radiation. In some embodiments, at least some functional modules of the mobile communications module 450 may be disposed in the processor 410. In some embodiments, at least some functional modules of the mobile communications module 450 and at least some modules of the processor 410 may be disposed in a same device.

The mobile phone 401 may implement a photographing function by using an ISP, the camera 493, a video codec, a GPU, the display 494, an application processor, and the like.

The camera 493 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format such as RGB or YUV. In some embodiments, the mobile phone 401 may include four or N cameras 493, where N is a positive integer greater than 4.

The external memory interface 420 may be configured to connect to an external memory card, for example, a micro SD card, to extend a storage capability of the mobile phone 401. The external memory card communicates with the processor 410 through the external memory interface 420, to implement a data storage function. For example, files such as music and videos are stored in the external memory card.

The mobile phone 401 may implement an audio function by using the audio module 470, the speaker 470A, the receiver 470B, the microphone 470C, the headset interface 470D, the application processor, and the like.

The receiver 470B, also referred to as an "earpiece", is configured to convert an audio electrical signal into a sound signal. When the mobile phone 401 answers an incoming call or voice information, the receiver 470B may be placed close to a human ear to answer the voice. For example, after the mobile phone 401 establishes a Bluetooth connection to the third Bluetooth device 400, the receiver 470B plays voice data transmitted by the third Bluetooth device 400 through Bluetooth.

The microphone 470C, also referred to as a "mike" or a "mic", is configured to convert a sound signal into an electrical signal. When making a call or sending a voice message, a user may make a sound near the microphone 470C through the mouth of the user, to input a sound signal to the microphone 470C. At least one microphone 470C may be disposed in the mobile phone 401. In some other embodiments, two microphones 470C may be disposed in the mobile phone 401, to collect a sound signal and further implement a noise reduction function. In some other embodiments, three, four, or more microphones 470C may be alternatively disposed in the mobile phone 401, to collect a sound signal, implement noise reduction, and identify a sound source, so as to implement a directional recording function and the like. For example, after establishing the Bluetooth connection to the third Bluetooth device 400, the mobile phone 401 may send audio information recorded by the microphone 470C to the third Bluetooth device 400.

The headset interface 470D is configured to connect to a wired headset. The headset interface 470D may be the USB interface 430, or may be a 3.5 mm open mobile terminal platform (open mobile terminal platform, OMTP) standard interface or cellular telecommunications industry association of the USA (cellular telecommunications industry association of the USA, CTIA) standard interface.

The button 490 includes a power button, a volume button, and the like. The button 490 may be a mechanical button, or a touch button. The mobile phone 401 may receive a button input, and generate a button signal input related to a user setting and function control of the mobile phone 401.

The motor 491 may generate a vibration prompt. The motor 491 may be used for an incoming call vibration prompt, or may be used for touch vibration feedback. For example, touch operations performed on different applications (for example, photographing and audio playback) may correspond to different vibration feedback effects. The motor 491 may also correspond to different vibration feedback effects for touch operations performed on different areas of the display 494. Different application scenarios (for example, a time reminder, information receiving, an alarm, and a game) may also correspond to different vibration feedback effects. A touch vibration feedback effect may be further customized.

The indicator 492 may be an indicator light, and may be configured to indicate a charging state or a power change; or may be used to indicate a message, a missed call, a notification, or the like.

The SIM card interface 495 is configured to connect a SIM card. The SIM card may be inserted into the SIM card interface 495 or removed from the SIM card interface 495, to implement contact with or separation from the mobile phone 401. The mobile phone 401 may support four or N SIM card interfaces, where N is a positive integer greater than 4. The SIM card interface 495 can support a nano-SIM card, a micro-SIM card, a SIM card, and the like. A plurality of cards may be simultaneously inserted into a same SIM card interface 495. The plurality of cards may be of a same type or different types. The SIM card interface 495 is applicable to different types of SIM cards. The SIM card interface 495 may also be compatible with the external memory card. The mobile phone 401 interacts with a network by using the SIM card, to implement functions such as calling and data communication. In some embodiments, the mobile phone 401 uses an eSIM, namely, an embedded SIM card. The eSIM card may be embedded in the mobile phone 401, and cannot be separated from the mobile phone 401.

It should be understood that the structure shown in this embodiment of the present invention does not constitute a specific limitation on the mobile phone 401. In some other embodiments of the present invention, more or fewer components than those shown in the figure may be included in the mobile phone 401, or some components are combined, or some components are split, or different component arrangements are included. The components shown in the figure may be implemented by hardware, software, or a combination of software and hardware.

Optionally, the first Bluetooth device 100 may be any one of the following devices: a tablet computer, a notebook computer, a palmtop computer, a mobile Internet device (mobile Internet device, MID), a vehicle-mounted device, a virtual reality (virtual reality, VR) device, an augmented reality (augmented reality, AR) device, a smart home device, an intelligent robot, or the like, provided that the device can provide a voice call service for a user and supports a Bluetooth connection function. This is not limited in this embodiment of this application.

In the communication system shown in FIG. 1B, the large-screen electronic device 200 may be shown in FIG. 3, the second Bluetooth device 300 may be shown in FIG. 4, and the third Bluetooth device 400 may be shown in FIG. 2. Details are not described herein again.

It should be understood that the terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c.

In addition, unless otherwise stated, ordinal numbers such as "first" and "second" in embodiments of this application are for distinguishing between a plurality of obj ects, but are not intended to limit an order, a time sequence, priorities, or importance of the plurality of obj ects. For example, a first priority criterion and a second priority criterion are merely used to distinguish between different criteria, but do not indicate different content, priorities, importance, or the like of the two criteria.

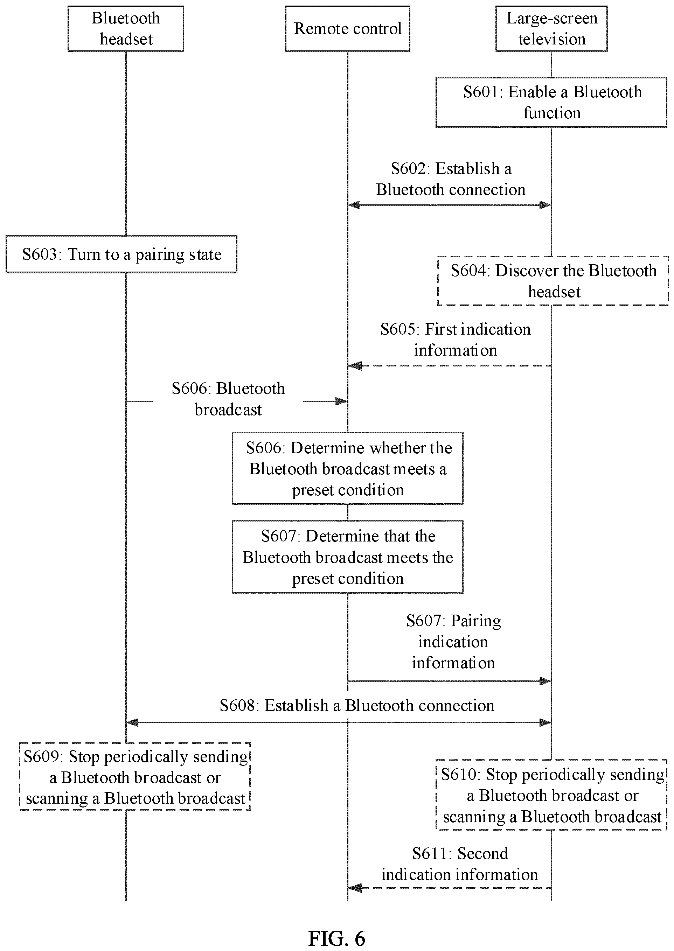

FIG. 6 is a flowchart of a communication method for multi-device Bluetooth pairing according to an embodiment of this application. The method may be applied to the communication system shown in FIG. 1A. For ease of description, in the following embodiment, an example is used in which the first Bluetooth device 100 shown in FIG. 2 is a Bluetooth headset, the large-screen electronic device 200 shown in FIG. 3 is a large-screen television, and the second Bluetooth device 300 shown in FIG. 4 is a remote control. The flowchart is described as follows:

S601: The large-screen television enables a Bluetooth function.

In some embodiments, when a user presses a power on/off button on the remote control or the large-screen television, the large-screen television is powered on. After the large-screen television is powered on, each module in the large-screen television is in an operating state. For example, if the wireless communications module 250 shown in FIG. 3 is in the operating state, the large-screen television enables the Bluetooth function without any operation of the user. It should be noted that, in this embodiment of this application, the wireless communications module 250 in the large-screen television may be a Bluetooth component, configured to implement the Bluetooth function of the large-screen television.

Because the Bluetooth function increases power consumption of the large-screen television, to reduce power consumption, in some embodiments, after the large-screen television is powered on, the Bluetooth function may not be automatically enabled, but the Bluetooth function of the large-screen television is enabled based on an operation performed by the user on a remote control matched with the large-screen television.

For example, when the large-screen television is in a power-on state, some modules of the large-screen television are in an operating state. For example, the processor 210, the audio module 260, the display 282, the button 280, the internal memory 221, the power management module 241, and the sensor module 270 shown in FIG. 3 are in the operating state, and other modules may not be in the operating state temporarily. When the user needs to use the Bluetooth function of the large-screen television, the user first controls the large-screen television to enter a settings user interface by operating a button on the remote control, and the settings user interface includes a Bluetooth option. Then, the user selects and enables the Bluetooth function by operating a button on the remote control, so that the Bluetooth component of the large-screen television is in the operating state, and the Bluetooth function of the large-screen television is enabled.

In some embodiments, after the Bluetooth function of the large-screen television is enabled, Bluetooth information may be periodically broadcast or Bluetooth information may be periodically scanned, or Bluetooth information may be broadcast and simultaneously Bluetooth information may be scanned. The Bluetooth information may be a specified Bluetooth broadcast. The Bluetooth broadcast may be connectable undirected broadcast (connectable undirected event type), and may include broadcast data and scan response data. Alternatively, the Bluetooth broadcast may be a scannable undirected broadcast (scannable undirected event type), or may be referred to as a discoverable broadcast. Such a broadcast cannot be used to initiate a Bluetooth connection, but allows another electronic device to scan an electronic device that sends the broadcast. However, e a Bluetooth connection cannot be established based on the broadcast. Certainly, the Bluetooth information may alternatively be other content. This is not limited herein.

In some embodiments, after the Bluetooth function of the large-screen television is enabled, the large-screen television may turn to a Bluetooth scanning state to scan for available devices around. In some embodiments, a specified broadcast, that is, a broadcast including a Bluetooth address of a remote control, may be sent to connect to a paired remote control.

In this embodiment of this application, after the Bluetooth function of the large-screen television is enabled, the large-screen television may continuously send the foregoing Bluetooth broadcast at a specified frequency at a preset periodicity, so that the Bluetooth broadcast is scanned and obtained by another electronic device. Alternatively, after the Bluetooth function of the large-screen television is enabled, the large-screen television may perform periodic frequency hopping on a specified frequency band, to receive a Bluetooth broadcast sent by another device.

S602: The large-screen television establishes a Bluetooth connection to the remote control.

After the Bluetooth function of the large-screen television is enabled, if the large-screen television periodically broadcasts the Bluetooth information, after the remote control is powered on and receives the Bluetooth information, the remote control may send a pairing request to the large-screen television based on the Bluetooth information. After receiving the pairing request, the large-screen television may return a pairing success response message to the remote control, so that the Bluetooth component in the large-screen television is successfully paired with a Bluetooth component of the remote control, to establish a Bluetooth connection. Alternatively, the remote control may periodically broadcast Bluetooth information after being powered on. After the Bluetooth function of the large-screen television is enabled, the large-screen television periodically scans Bluetooth information. If the large-screen television scans the Bluetooth information broadcast by the remote control, the large-screen television may send a pairing request to the remote control. After receiving the pairing request, the remote control may return a pairing success response message to the large-screen television, so that the Bluetooth component in the large-screen television is successfully paired with a Bluetooth component of the remote control, to establish a Bluetooth connection. After the Bluetooth connection is established between the large-screen television and the remote control, data exchange may be performed through the Bluetooth connection.

It should be noted that, in this case, to reduce power consumption of the remote control, after the Bluetooth connection is established between the large-screen television and the remote control, the remote control may stop broadcasting Bluetooth information or stopping scanning Bluetooth information.

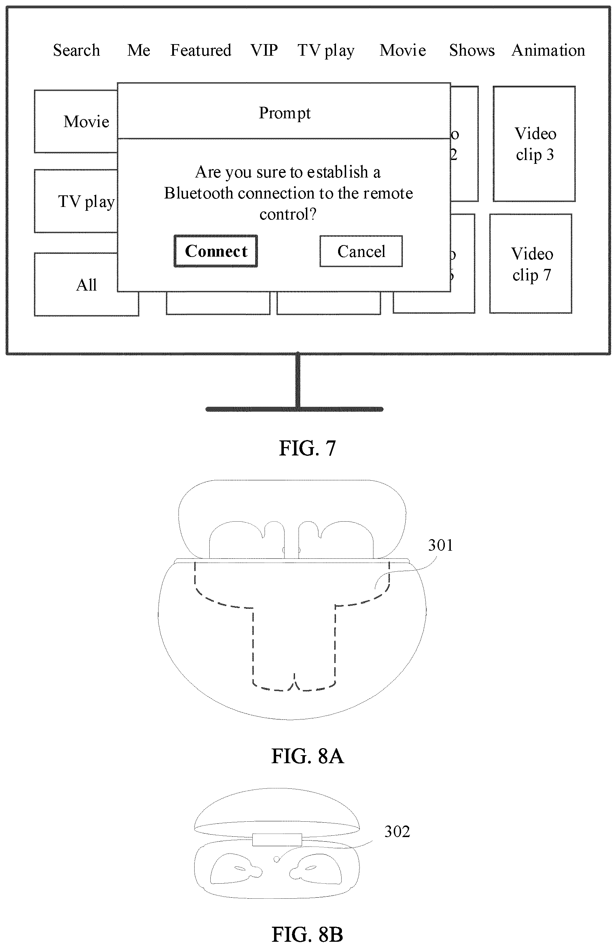

In some embodiments, in a scenario of first connection, identification information of the large-screen television may be preset in the remote control. The identification information may include a MAC address of the large-screen television, a name or a unique identifier of the large-screen television, or the like. In this way, after being powered on, the remote control may directly page (page) the large-screen television based on the preset identification information of the large-screen television, to quickly establish a Bluetooth connection to the large-screen television. In some embodiments, the large-screen television may alternatively be paired with the remote control in a proximity discovery manner. That is, when a distance between the remote control and the large-screen television is less than a threshold, or a received signal strength indication (received signal strength indication, RSSI) value is greater than or equal to a preset threshold, a pop-up box may be displayed on a display of the large-screen television. As shown in FIG. 7, the pop-up box is used to indicate whether to establish a Bluetooth connection to the remote control, and the pop-up box further includes a connect control or a cancel control. An operation of the user on a different control is received by using the remote control, so that the large-screen television can respond to a different operation. For example, when the user operates a direction button and an OK button of the remote control to select the connect control, the large-screen television sends a pairing request to the remote control, to establish the Bluetooth connection to the remote control. When the user selects the cancel control, the large-screen television does not trigger a pairing process with the remote control.

It should be noted that the Bluetooth connection between the remote control and the large-screen television may be SPP, BLE, GATT, or the like. This is not limited herein. In some embodiments, considering power consumption of the large-screen television and the remote control, a BLE-type Bluetooth connection may be established between the remote control and the large-screen television, to reduce the power consumption of the large-screen television and the remote control.

In some embodiments, the remote control may further perform Bluetooth pairing with the large-screen television by using an NFC tag tag.

S603: The Bluetooth headset turns to a pairing state.

If the user wants to perform a Bluetooth connection to the large-screen television by using the Bluetooth headset, the user may open a charging case of the Bluetooth headset, to enable the Bluetooth headset to be in the pairing state.

The following describes the pairing state of the Bluetooth headset.

In this embodiment of this application, the pairing state of the Bluetooth headset may also be referred to as a page (page) state. In some embodiments, the Bluetooth headset is used together with a matched charging case. When the Bluetooth headset is in the pairing state, the Bluetooth headset may be placed in a slot 301 of the charging case, and the charging case is in an opened state, as shown in FIG. 8A. In this case, to enable the user to clearly learn a current state of the Bluetooth headset, the charging case may further include a state indicator 302, configured to indicate a state of the Bluetooth headset. FIG. 8B is a top view in which the Bluetooth headset is disposed in the charging case and the charging case is in the opened state. In FIG. 8B, the state indicator 302 is located on one side of the slot 301. The state indicator 302 may display different colors, for example, green, yellow, and white, and indicate states of the Bluetooth headset by using the different colors. For example, when the state indicator 302 is yellow, it indicates that the Bluetooth headset is in the pairing state. Alternatively, the state indicator 302 may display a same color at different blinking frequencies, for example, display white and blink at a slow speed, display white and blink at a medium speed, and display white and blink at a fast speed, to indicate states of the Bluetooth headset by using the different frequencies. For example, when the state indicator 302 displays white and blink at a medium speed, it indicates that the Bluetooth headset is in the pairing state. In this embodiment of this application, a manner in which the state indicator 302 indicates the pairing state is not limited. In some embodiments, when the Bluetooth headset is disposed outside the charging case, the Bluetooth headset may alternatively be in the pairing state by default. A form in which the Bluetooth headset is in the pairing state is not limited herein.

Generally, when the Bluetooth headset is in the pairing state, another electronic device that enables a Bluetooth function may discover the Bluetooth headset by scanning. For example, a smartphone may discover the Bluetooth headset, and if the smartphone has been previously successfully paired with the Bluetooth headset, when the smartphone subsequently discovers the Bluetooth headset, the smartphone may be automatically paired with and connected to the Bluetooth headset. Therefore, to prevent the Bluetooth headset from being paired with and connected to another electronic device other than the large-screen television, in this embodiment of this application, the pairing state of the Bluetooth headset may be subdivided into a pairable and discoverable state and a pairable and undiscoverable state. It should be understood that, being discoverable and undiscoverable are specific to the another electronic device, that is, regardless of whether the Bluetooth headset is in any one of the foregoing two states, the large-screen television can discover the Bluetooth headset by scanning. However, when the Bluetooth headset is in the pairable and discoverable state, the another electronic device can discover the Bluetooth headset by scanning; and when the Bluetooth headset is in the pairable and undiscoverable state, the another electronic device cannot discover the Bluetooth headset by scanning.

In some embodiments, the pairable and discoverable state may also be referred to as a page scan (page scan) state. Still refer to FIG. 8B. When the Bluetooth headset is placed in the slot 301 of the charging case, the two states may be indicated by using the state indicator 302. For example, the state indicator 302 may separately indicate the two states by displaying different colors. For example, when the state indicator 302 displays yellow, the state indicator 302 is used to indicate that the Bluetooth headset is in the pairable and discoverable state, and when the state indicator 302 displays white, the state indicator 302 is used to indicate that the Bluetooth headset is in the pairable and undiscoverable state. Alternatively, a same color may be displayed at different frequencies to indicate the two states. Details are not described herein again.

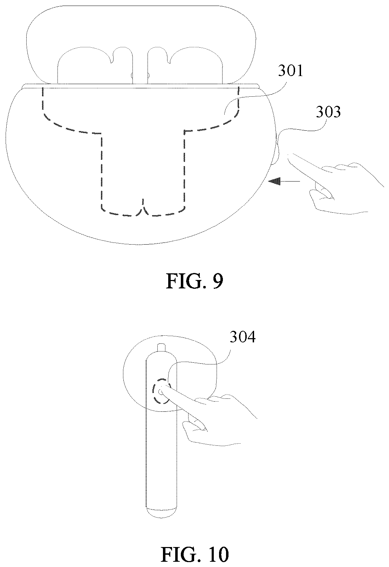

In some embodiments, when the Bluetooth headset is placed in the charging case, the foregoing two states may be switched based on an operation performed by the user on the charging case. For example, refer to FIG. 9. A switch button 303 may be disposed on the charging case. When the Bluetooth headset is placed in the charging case and the charging case is in the opened state, the Bluetooth headset is in the pairable and discoverable state by default. After the user presses the button 303, the Bluetooth headset is switched to the pairable and undiscoverable state. Alternatively, when the Bluetooth headset is placed in the charging case and the charging case is in the opened state, the Bluetooth headset is in the pairable and undiscoverable state by default. After the user presses the button 303, the Bluetooth headset is switched to the pairable and discoverable state. The user may perform the foregoing state switching by pressing the button 303 once, or may perform the foregoing state switching by pressing and holding the button 303, for example, pressing for more than 2 seconds. A specific operation manner is not limited.

In some embodiments, when the Bluetooth headset is placed outside the charging case, the foregoing two states may also be switched based on an operation performed by the user on the touch button on the Bluetooth headset. For example, refer to FIG. 10. A touch button 304 for state switching is disposed on the Bluetooth headset. After the user takes out the Bluetooth headset from the charging case, the Bluetooth headset is in the pairable and discoverable state by default. Then, when the user touches the touch button 304, the Bluetooth headset is switched to the pairable and undiscoverable state. Alternatively, after the user takes out the Bluetooth headset from the charging case, the Bluetooth headset is in the pairable and undiscoverable state by default. Then, when the user touches the touch button 304, the Bluetooth headset is switched to the pairable and discoverable state. The user may perform switching by performing operations of a plurality of types, for example, tapping the touch button 304, or continuously touching the touch button 304 twice, or touching the touch button 304 for more than a specific length of time. This is not limited herein.

It should be noted that, if the user only wants to connect the Bluetooth headset to the large-screen television, the user may enable the Bluetooth headset to be in the foregoing pairable and undiscoverable state in the manner shown in FIG. 9 or FIG. 10, to prevent the Bluetooth headset from being incorrectly connected to another device.

In some embodiments, after the Bluetooth headset turns to the pairing state, the Bluetooth headset may periodically broadcast Bluetooth information or scan Bluetooth information, or may simultaneously broadcast Bluetooth information and scan Bluetooth information. The Bluetooth information may be a specified Bluetooth broadcast. The Bluetooth broadcast may be similar to the Bluetooth broadcast sent by the large-screen television in step S601. Details are not described herein again. For example, after turning to the pairing state, the Bluetooth headset may continuously send the Bluetooth broadcast at a specified frequency at a preset period, so that the Bluetooth broadcast is scanned and obtained by the large-screen television. Alternatively, after the Bluetooth headset is connected and is in the pairing state, the Bluetooth headset may perform periodic frequency hopping on a specified frequency band, to receive a Bluetooth broadcast sent by another electronic device such as the large-screen television. An example in which the Bluetooth information is a Bluetooth broadcast is used for description below.

In this embodiment, an operation of enabling the Bluetooth headset to be in the pairing state is a first operation. After detecting the first operation, the Bluetooth headset may periodically send a Bluetooth broadcast. The Bluetooth broadcast is the Bluetooth information.

S604: The large-screen television discovers the Bluetooth headset.

In some embodiments, after the Bluetooth function of the large-screen television is enabled and the Bluetooth headset turns to the pairing state, the Bluetooth headset may send the Bluetooth broadcast at a preset frequency, and the large-screen television may continuously hop at frequencies corresponding to a preset frequency band to scan whether there is a Bluetooth broadcast sent by another electronic device, to determine a Bluetooth device that can be connected. When the large-screen television hops to a frequency corresponding to the Bluetooth headset, the large-screen television may receive the Bluetooth broadcast sent by the Bluetooth headset. In other words, the Bluetooth headset is discovered.

In some embodiments, after the Bluetooth function of the large-screen television is enabled and the Bluetooth headset turns to the pairing state, the large-screen television may send the Bluetooth broadcast at a preset frequency, and the Bluetooth headset may continuously hop at frequencies corresponding to a preset frequency band to scan whether there is a Bluetooth broadcast sent by another electronic device. When the Bluetooth headset hops to a frequency corresponding to the large-screen television, the Bluetooth headset may receive the Bluetooth broadcast sent by the large-screen television, and then may send a response message to the large-screen television based on the Bluetooth broadcast sent by the large-screen television. After receiving the response message, the large-screen television discovers the Bluetooth headset.

Certainly, the large-screen television may alternatively discover the Bluetooth headset in another manner. For example, in some embodiments, the large-screen television and the Bluetooth headset may further use a proximity discovery manner, that is, determine whether a distance between the Bluetooth headset and the large-screen television is less than a threshold, or the large-screen television detects whether an RSSI value of the Bluetooth broadcast sent by the Bluetooth headset is greater than or equal to a threshold, or the like, which is not limited herein.

It should be noted that, in the conventional technology, after the large-screen television discovers the Bluetooth headset, a user needs to select, by operating a remote control, the Bluetooth headset that needs to be paired from a pairing list, and then a Bluetooth connection to the Bluetooth headset is established. In this embodiment of this application, to improve pairing efficiency, steps performed after the large-screen television discovers the Bluetooth headset are specifically as follows:

S605: The large-screen television sends first indication information to the remote control, where the first indication information is used to indicate the remote control to enable Bluetooth scanning, and the remote control receives the first indication information.

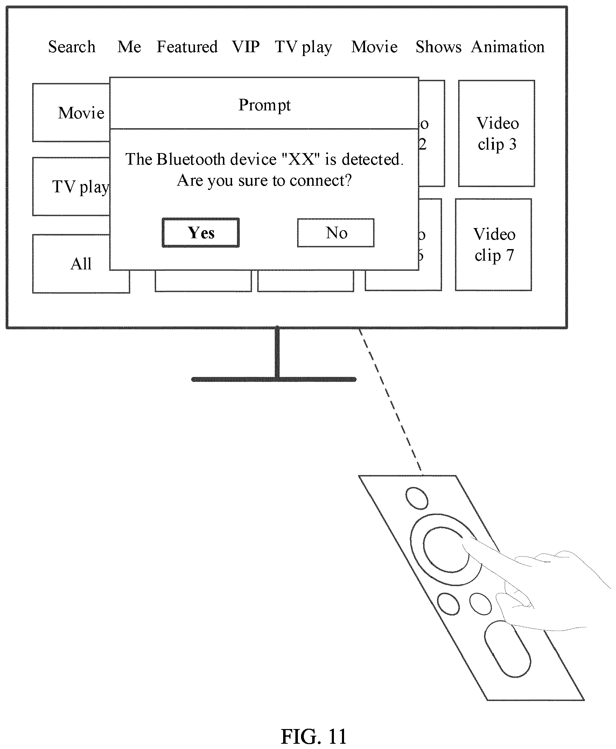

After discovering the Bluetooth headset, the large-screen television may generate and output first prompt information, where the first prompt information is used to indicate whether to perform a Bluetooth connection to the Bluetooth headset, the first prompt information may be output in a manner of displaying a pop-up box on the large-screen television, and the pop-up box is used to indicate the user whether to establish a Bluetooth connection to the discovered Bluetooth device. As shown in FIG. 11, the pop-up box may display a fact that the large-screen television finds a Bluetooth device that can be paired, and the pop-up box may further include a Yes control and a No control. An operation performed by the user on a different control, that is, a second operation, is received by using the remote control, so that the large-screen television may respond to the different operation. For example, when the user selects the Yes control, the large-screen television may send the first indication information to the remote control through a Bluetooth link (for example, a BLE link or an SPP link) established with the remote control, to indicate the remote control to scan a nearby Bluetooth device that can be paired. If the user selects the No control, the large-screen television does not send the first indication information. Definitely, the first prompt information may alternatively be output in another form, for example, may be output in a voice or indicator manner, which is not limited herein.

In this embodiment of this application, the first indication information may be a data packet including a specified packet or packet header. After obtaining the specified packet or packet header, the remote control may enable the Bluetooth scanning function of the remote control based on the specified packet or packet header. Alternatively, the first indication information may alternatively be information pre-agreed on by the large-screen television and the remote control, where the pre-agreed information is used to indicate the remote control to enable the Bluetooth scanning function. Certainly, the first indication information may alternatively be in another form. This is not limited herein.

In some embodiments, after the remote control enables a Bluetooth scanning function, the remote control may output prompt information. The prompt information that the remote control is in a Bluetooth scanning state. For example, the prompt information may be vibration, a sound, an indicator, or the like. This is not limited herein.

It should be noted that step S604 and step S606 are performed on a premise that the remote control does not enable the Bluetooth scanning function. If the remote control is always in the Bluetooth scanning state after establishing the Bluetooth connection to the large-screen television, step S604 and step S606 may not be performed. That is, step S604 and step S606 are optional steps, and step S604 and step S606 are represented by dashed lines in FIG. 6.

S606: The remote control detects the Bluetooth broadcast sent by the Bluetooth headset, and determines whether the Bluetooth broadcast meets a preset condition.

In this embodiment of this application, the preset condition is to determine whether signal strength of the Bluetooth broadcast is greater than or equal to a threshold. When the signal strength of the Bluetooth broadcast is greater than or equal to the threshold, it indicates that the Bluetooth headset is within a preset distance of the remote control. The threshold may be set by a skilled person based on a use requirement, and is not limited herein.

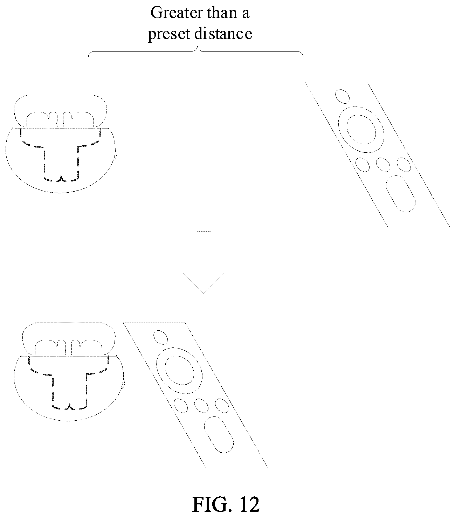

In some embodiments, after the remote control is in the Bluetooth scanning state, the user may adjust a distance between the remote control and the Bluetooth headset, so that the remote control scans the Bluetooth broadcast sent by the Bluetooth headset. For example, refer to FIG. 12. The user may move the remote control close to the Bluetooth headset, for example, 5 cm away from the Bluetooth headset. After detecting the Bluetooth broadcast sent by the Bluetooth headset, the remote control may determine whether a detected RSSI of the Bluetooth broadcast is greater than or equal to a threshold, to determine whether the Bluetooth broadcast meets a preset condition, where when the RSSI is greater than or equal to the threshold, it is determined that the Bluetooth broadcast meets the preset condition.

In some embodiments, before the remote control is in the Bluetooth scanning state, or when the Bluetooth headset turns to the pairing state, the user may move the Bluetooth headset close to the remote control, and adjust a distance between the remote control and the Bluetooth headset. In this way, when the remote control performs Bluetooth scanning, the Bluetooth broadcast sent by the Bluetooth headset can be detected.

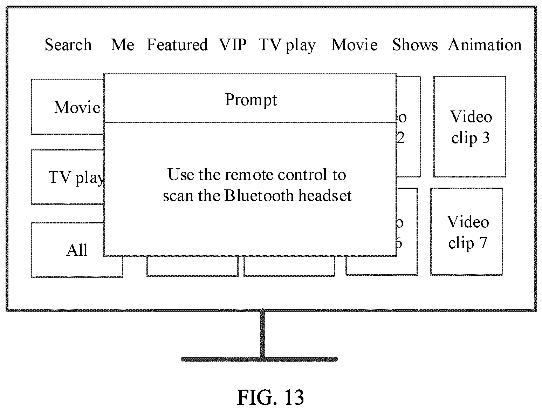

In some embodiments, the user may alternatively place the remote control close to the Bluetooth headset based on a prompt of the large-screen television. For example, after the large-screen television discovers the Bluetooth headset, the large-screen television may output prompt information on the display of the large-screen television. As shown in FIG. 13, the large-screen television displays "Use the remote control to scan the Bluetooth headset" on the display. In this way, the user can move the remote control close to the Bluetooth headset based on the prompt information.

In some embodiments, after the large-screen television establishes the Bluetooth connection to the remote control, the large-screen television may send determine indication information to the remote control. The determine indication information is used to indicate the remote control to determine, after scanning and obtaining a Bluetooth broadcast of another electronic device, whether the Bluetooth broadcast of the another electronic device meets a preset condition. Therefore, after detecting the Bluetooth broadcast sent by the Bluetooth headset, the remote control automatically determines, based on the determine indication information, whether the Bluetooth broadcast of the Bluetooth headset meets the preset condition.

It should be noted that in step S604 and step S606, the large-screen television and the remote control both discover the Bluetooth headset by detecting the Bluetooth broadcast sent by the Bluetooth headset. A difference lies in that a condition for the large-screen television to detect the Bluetooth broadcast is different from a condition for the remote control to detect the Bluetooth broadcast. In some embodiments, in step S604, when detecting that signal strength of the Bluetooth broadcast is greater than or equal to a second threshold, the large-screen television determines that the Bluetooth broadcast is detected, to discover the Bluetooth headset; and in step S606, when detecting that signal strength of the Bluetooth broadcast is greater than or equal to a first threshold, the remote control determines that the Bluetooth broadcast is detected, to discover the Bluetooth headset. In addition, the first threshold is different from the second threshold, and the first threshold is greater than the second threshold. For example, the first threshold may be 20 dB, and the second threshold may be 10 dB, that is, when the large-screen television detects that the signal strength of the Bluetooth broadcast is greater than or equal to 10 dB, the large-screen television determines that the Bluetooth headset is discovered; and the remote control discovers the Bluetooth headset only when the remote control detects that the signal strength of the Bluetooth broadcast is greater than or equal to 20 dB. The second threshold may be a threshold used for discovering another device in a Bluetooth connection in the conventional technology, and the first threshold may be set by a skilled person based on an actual use requirement and/or the second threshold, which is not limited herein.

Because the first threshold used by the remote control to discover the Bluetooth headset is smaller than a threshold used in the conventional technology, a probability of false detection by the remote control can be reduced, and accuracy of a Bluetooth connection can be improved.

S607: If the remote control determines that the Bluetooth broadcast meets the preset condition, the remote control sends pairing indication information to the large-screen television, and the large-screen television receives the pairing indication information.

In this embodiment of this application, the pairing indication information is used to indicate the large-screen television to initiate a pairing operation to the Bluetooth headset, to establish a Bluetooth connection between the large-screen television and the Bluetooth headset.

In some embodiments, the pairing indication information includes pairing information of the Bluetooth headset obtained by the remote control, and the pairing information may include a Bluetooth address, a name, a model, and the like of the Bluetooth headset. For example, when the remote control determines that the Bluetooth headset is within the preset distance, the remote control may send a request for obtaining pairing information of the Bluetooth headset to the Bluetooth headset by using the wireless communications module 306 of the remote control. After receiving the request, the Bluetooth headset feeds back the pairing information to the remote control by using the wireless communications module 107 of the Bluetooth headset. The memory of the remote control may pre-store a preset operation. The preset operation may be: after obtaining pairing information of an electronic device, sending, through a Bluetooth link, the obtained pairing information to an electronic device that establishes a Bluetooth connection to the remote control. In this way, the remote control may add the pairing information to the pairing indication information based on the preset operation, and send the pairing indication information to the large-screen television through a Bluetooth link between the remote control and the large-screen television. Alternatively, after the large-screen television establishes the Bluetooth connection to the remote control, the large-screen television may send information obtain indication information to the remote control, where the information obtain indication information is used to indicate the remote control to send, after obtaining pairing information of an electronic device within the preset distance, the pairing information to the large-screen television. After obtaining pairing information of the Bluetooth headset, the remote control sends the pairing information to the large-screen television based on the information obtain indication information.

In some embodiments, the pairing indication information may alternatively not include pairing information of the Bluetooth headset. Specifically, the pairing information of the Bluetooth headset may be carried in the Bluetooth broadcast. That is, after receiving the Bluetooth broadcast of the Bluetooth headset, another electronic device may obtain the pairing information of the Bluetooth headset by parsing the Bluetooth broadcast. In this case, when step S604 is performed, that is, when the large-screen television discovers the Bluetooth headset, the large-screen television may obtain the pairing information of the Bluetooth headset through the Bluetooth broadcast sent by the Bluetooth headset. However, in this case, the large-screen television is not able to determine whether to initiate a pairing connection to the Bluetooth headset, which needs to be further determined by the remote control. To be specific, the remote control needs to determine whether the Bluetooth headset is within the preset distance of the remote control (for example, whether the signal strength of the Bluetooth information is greater than or equal to the first threshold). If the Bluetooth headset is within the preset distance of the remote control, the large-screen television needs to initiate a pairing connection to the Bluetooth headset; or if the Bluetooth headset is not within the preset distance of the remote control, the large-screen television does not need to initiate a pairing connection to the Bluetooth headset. It may be understood that, that the remote control determines whether the Bluetooth headset is within the preset distance is a trigger condition that triggers the large-screen television to initiate the pairing connection to the Bluetooth headset.

S608: The large-screen television establishes a Bluetooth connection to the Bluetooth headset.

In some embodiments, after receiving the pairing indication information, the large-screen television directly performs pairing connection to the Bluetooth headset.

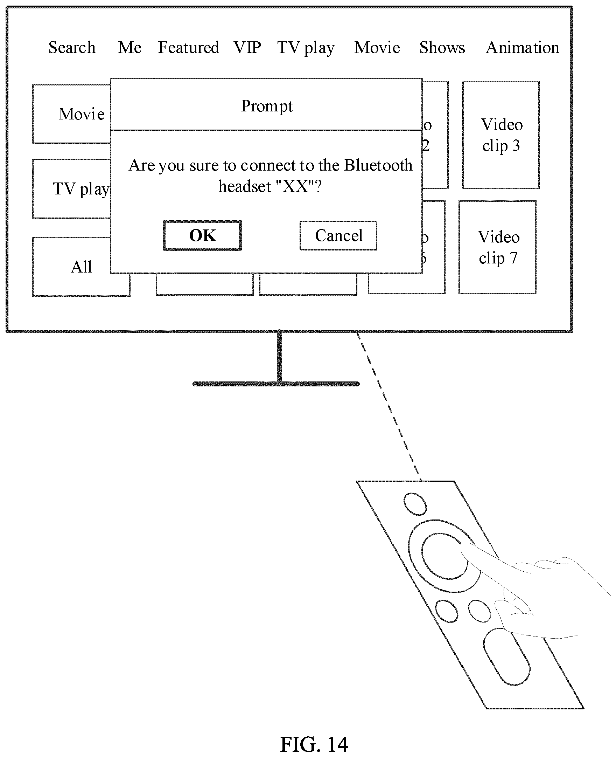

In some embodiments, after receiving the pairing indication information, the large-screen television may generate and output second prompt information, where the second prompt information is used to indicate whether to perform a Bluetooth connection to the Bluetooth headset, and respond according to the user operation received by the remote control. For example, the large-screen television outputs pairing prompt information on the display, receives an operation of the user by using the remote control, and responds to a different operation. For example, after the large-screen television receives the pairing indication information sent by the remote control, the large-screen television may output pairing prompt information shown in FIG. 14. The pairing prompt information may include a name of the discovered Bluetooth headset, and prompt the user whether to connect to the Bluetooth headset. The pairing prompt information includes a determine control and a cancel control. The user may select, by operating the remote control, whether to connect to the Bluetooth headset, and select the determine control if the user determines to connect to the Bluetooth headset; or select the cancel control if the user determines not to connect to the Bluetooth headset. After detecting that the user selects the determine control (that is, a third operation), the large-screen television initiates a pairing connection to the Bluetooth headset.

In this embodiment of this application, the pairing connection may be a pairing connection procedure defined based on a Bluetooth standard specification, and the Bluetooth standard may be Core_v5.2 Vol2, Part F, 3.1/4.1/4.2, or the like. This is not limited herein. A specific pairing connection process is similar to that in step S602, and details are not described herein again.

In the foregoing manner, the user only needs to place the remote control close to the Bluetooth headset, to implement the Bluetooth connection between the Bluetooth headset and the large-screen television. The implementation is simple, and efficiency of the Bluetooth connection can be improved.

To reduce power consumption of the large-screen television, the Bluetooth headset, and the remote control, after the Bluetooth connection is established between the Bluetooth headset and the large-screen television, a function of sending a Bluetooth broadcast or performing Bluetooth scanning of each device may be disabled. Refer to FIG. 6. The method may further include the following steps.

S609: The Bluetooth headset stops periodically sending a Bluetooth broadcast or scanning a Bluetooth broadcast.

Specifically, the user may close the charging case of the Bluetooth headset, to indicate the Bluetooth headset to stop sending a Bluetooth broadcast or scanning a Bluetooth broadcast, or the Bluetooth headset may automatically stop sending a Bluetooth broadcast or scanning and obtaining a Bluetooth broadcast after establishing the Bluetooth connection to the large-screen television.

S610: The large-screen television stops periodically sending a Bluetooth broadcast or scanning a Bluetooth broadcast.

After the large-screen television establishes the Bluetooth connection to the Bluetooth headset, the large-screen television automatically stops sending a Bluetooth broadcast or scanning a Bluetooth broadcast. Alternatively, after the Bluetooth headset stops sending the Bluetooth broadcast, if the large-screen television does not detect the Bluetooth broadcast within a preset length of time (for example, 2 minutes or 5 minutes), the large-screen television may stop scanning the Bluetooth broadcast.

S611: The large-screen television sends second indication information to the remote control, where the second indication information is used to indicate the remote control to disable the Bluetooth scanning function.

After establishing the Bluetooth connection to the Bluetooth headset, the large-screen television may actively send the second indication information for disabling the Bluetooth scanning function to the remote control, or may send the second indication information to the remote control after no Bluetooth broadcast is detected within the preset length of time, which is not limited herein.

It should be noted that step S609 to step S611 are optional steps, in other words, do not necessarily need to be performed, and are represented by dashed lines in FIG. 6. In addition, if step S609 to step S611 are performed, an execution sequence of step S609 to step S611 is not limited in this embodiment of this application. To be specific, step S609 to step S611 may be performed simultaneously, or step S611 may be performed first, then step S610 is performed, and finally step S609 is performed, or another execution sequence may be used. Details are not described herein.

In the embodiment shown in FIG. 6, the pairing connection between the Bluetooth headset and the large-screen television are implemented by using the Bluetooth component. In another example, a pairing connection between the Bluetooth headset and the large-screen television may alternatively be implemented in another wireless communication manner. For example, the pairing connection between the Bluetooth headset and the large-screen television may be implemented through near field communication (near field communication, NFC). This manner is described below in detail with reference to the accompanying drawings.

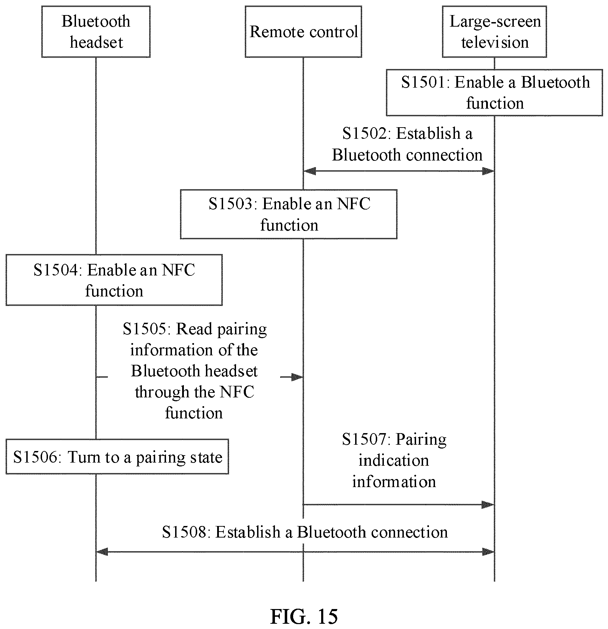

FIG. 15 is another example flowchart of a communication method for multi-device Bluetooth pairing according to an embodiment of this application. The method may be applied to the communication system shown in FIG. 1A. For ease of description, in the following embodiment, an example is used in which the first Bluetooth device 100 shown in FIG. 2 is a Bluetooth headset, the large-screen electronic device 200 shown in FIG. 3 is a large-screen television, and the second Bluetooth device 300 shown in FIG. 4 is a remote control. The flowchart is described as follows:
S1501: The large-screen television enables a Bluetooth function.
S1502: The large-screen television establishes a Bluetooth connection to the remote control.

Step S1501 and step S1502 are similar to step S601 and step S602, and details are not described herein again.

S1503: The remote control enables an NFC function.

In some embodiments, the remote control may automatically enable the NFC function after establishing the Bluetooth connection to the large-screen television. Alternatively, a button used to enable the NFC function may be added on the remote control. When the remote control detects that a user presses the NFC button, the NFC function of the remote control is enabled.

S 1504: The Bluetooth headset enables an NFC function.

In some embodiments, when the Bluetooth headset is placed in the charging case, the Bluetooth headset may automatically enable the NFC function when the charging case is in an opened state. Alternatively, a button for enabling the NFC function of the Bluetooth headset may be disposed on the charging case, and when the user presses the button, the NFC function of the Bluetooth headset is enabled.

In some embodiments, a touch button may be disposed on the Bluetooth headset. In this way, when the Bluetooth headset is placed outside the charging case, the NFC function of the Bluetooth headset may also be enabled by operating the touch button. The touch button may be separately disposed, or the touch button may be integrated into another touch key. For example, a function of the touch button is integrated in the touch button 304 shown in FIG. 10, and the NFC function is enabled by using a specific operation of the user. For example, the user may enable the NFC function of the Bluetooth headset by touching the touch button 304 three times.

In some embodiments, the remote control and the Bluetooth headset may alternatively be simultaneously triggered to enable respective NFC functions through a tap operation of the remote control on the Bluetooth headset. In this embodiment of this application, specific forms of step S 1503 and step S 1504 are not limited.

S 1505: The remote control reads pairing information of the Bluetooth headset through the NFC function.

In some embodiments, after the remote control enables the NFC function, a radio frequency field may be generated. After the user moves the remote control close to the Bluetooth headset (the Bluetooth headset may be placed in or outside the charging case), the Bluetooth headset generates a response message under an action of the radio frequency field. After detecting the response message, the remote control establishes a connection to the Bluetooth headset, and then reads the pairing information of the Bluetooth headset from the Bluetooth headset. In this case, the response message generated by the Bluetooth headset is Bluetooth information.

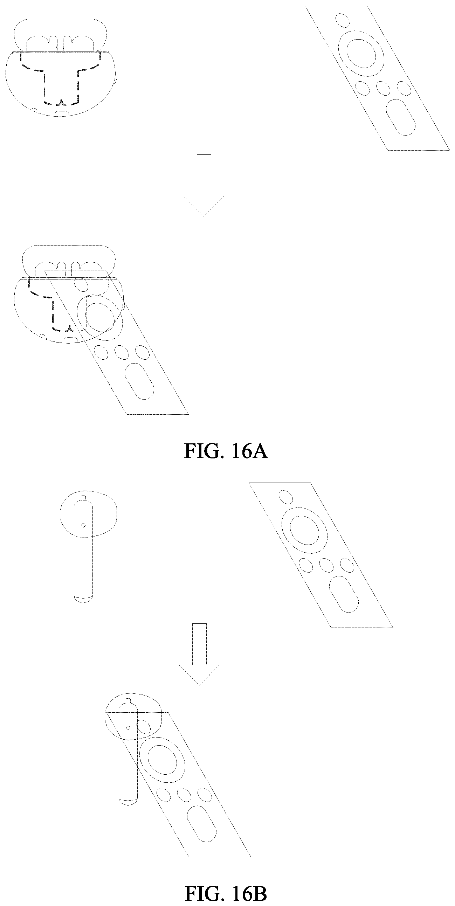

In some embodiments, a tag TAG is configured in the Bluetooth headset. The tag TAG pre-stores the pairing information of the Bluetooth headset. As shown in FIG. 16A, when the Bluetooth headset is placed in the charging case, the charging case is in the opened state, and the remote control touches the charging case, the remote control may read the pairing information of the Bluetooth headset from the tag TAG. Alternatively, as shown in FIG. 16B, the Bluetooth headset may alternatively be placed outside the charging case. When the remote control touches the Bluetooth headset, the remote control reads the pairing information of the Bluetooth headset from the tag TAG. In this case, information obtained by the remote control from the tag TAG is Bluetooth information, and the touch operation may be referred to as a fourth operation.

Content of the pairing information is similar to the pairing information in step S607, and details are not described herein again.

S1506: The Bluetooth headset turns to a pairing state.

Description of the pairing state is similar to the pairing state in step S603, and details are not described herein again.

In some embodiments, after the NFC function of the Bluetooth headset is enabled, the Bluetooth headset may automatically enter the pairing mode. Alternatively, the user may perform an operation to enable the Bluetooth headset to enter the pairing mode. For example, when the Bluetooth headset is placed in the charging case, the charging case is opened, so that the Bluetooth headset turns to the pairing state. Alternatively, a manner shown in FIG. 9 may be used. The button 303 on the charging case is pressed, so that the Bluetooth headset turns to a pairable and undiscoverable state. Alternatively, the Bluetooth headset may be taken out the charging case, to enable the Bluetooth headset to turn to the pairing state. A manner in which the Bluetooth headset turns to the pairing state is not limited herein.

In some embodiments, to reduce power consumption of the Bluetooth headset, when the Bluetooth headset is in the pairing state, but does not establish a Bluetooth connection to another electronic device within a length of time, the Bluetooth headset may automatically exit the pairing state. Alternatively, the Bluetooth headset may be periodically in the pairing state.

S1507: The remote control sends pairing indication information to the large-screen television, and the large-screen television receives the pairing indication information.

After obtaining pairing information of the Bluetooth headset from the Bluetooth headset by using the NFC function, the remote control may send the pairing indication information to the large-screen television.

It should be noted that, in this embodiment of this application, an execution sequence of step S1506 and step S1507 is not limited. To be specific, step S1506 may be performed before step S1507, or step S1507 may be performed before step S1506, or step S1506 and step S1507 are performed simultaneously. In FIG. 15, an example in which step S1506 is performed before step S1507 is used.

S1508: The large-screen television establishes a Bluetooth connection to the Bluetooth headset.

Step S1507 and step S1508 are similar to step S607 and step S608, and details are not described herein again.

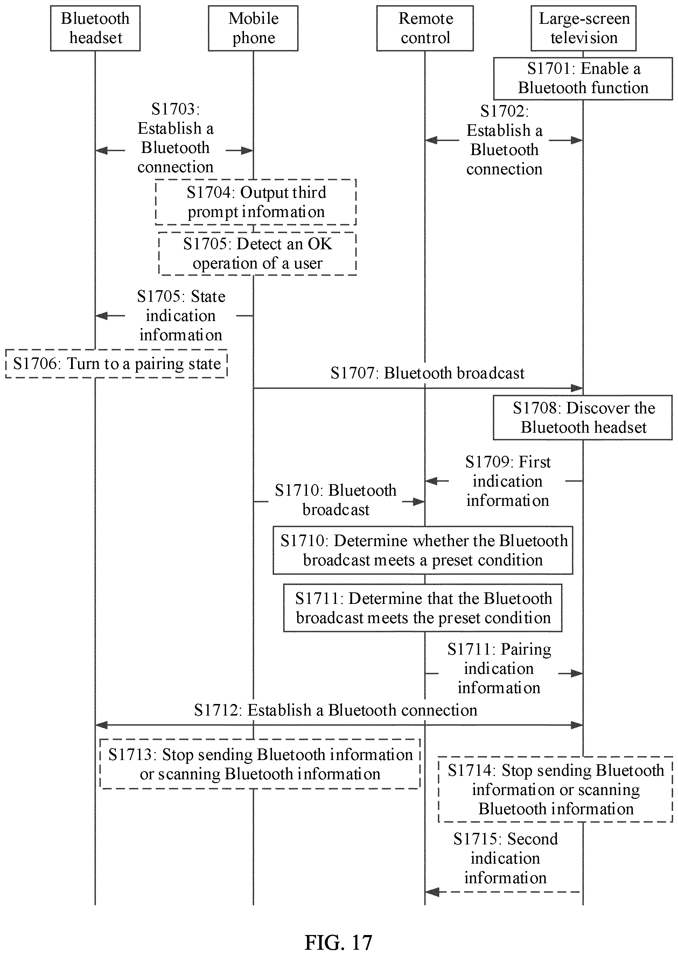

The embodiments shown in FIG. 6 and FIG. 15 are performed in a scenario in which the Bluetooth headset is not paired with another device. In another embodiment, for example, in the communication system shown in FIG. 1B, the Bluetooth headset may have been paired with another electronic device before being paired with the large-screen television. For example, the Bluetooth headset has established a pairing connection to a smartphone of a user. In this case, the large-screen television may be paired with the Bluetooth headset in a manner shown in FIG. 17. This manner is described below in detail with reference to the accompanying drawings.

FIG. 17 is still another example flowchart of a communication method for multi-device Bluetooth pairing according to an embodiment of this application. The method may be applied to the communication system shown in FIG. 1B. For ease of description, in the following embodiment, an example is used in which the first Bluetooth device 100 shown in FIG. 5 is a mobile phone, the large-screen electronic device 200 shown in FIG. 3 is a large-screen television, the second Bluetooth device 300 shown in FIG. 4 is a remote control, and the third Bluetooth device shown in FIG. 2 is a Bluetooth headset. The flowchart is described as follows:
S1701: The large-screen television enables a Bluetooth function.
S1702: The large-screen television establishes a Bluetooth connection to the remote control.

Step S1701 and step S1702 are similar to step S601 and step S602, and details are not described herein again.

S1703: The Bluetooth headset establishes a Bluetooth connection to the mobile phone.

Step S1703 is similar to step S1702, and details are not described herein again.

It should be noted that, in this embodiment of this application, an execution sequence of step S1701 to step S1703 is not limited.

S1704: The mobile phone outputs third prompt information, where the third prompt information is used to indicate whether to enable a function of establishing a Bluetooth connection between the large-screen television and the Bluetooth headset.

Whether to enable the function of establishing a Bluetooth connection between the large-screen television and the Bluetooth headset may be understood as follows: When this function is enabled, the Bluetooth headset may further be paired with the large-screen television after establishing the Bluetooth connection to the mobile phone. If this function is not enabled, the Bluetooth headset cannot be paired with the large-screen television after establishing the Bluetooth connection to the mobile phone. The user can determine whether to enable this function based on a requirement.

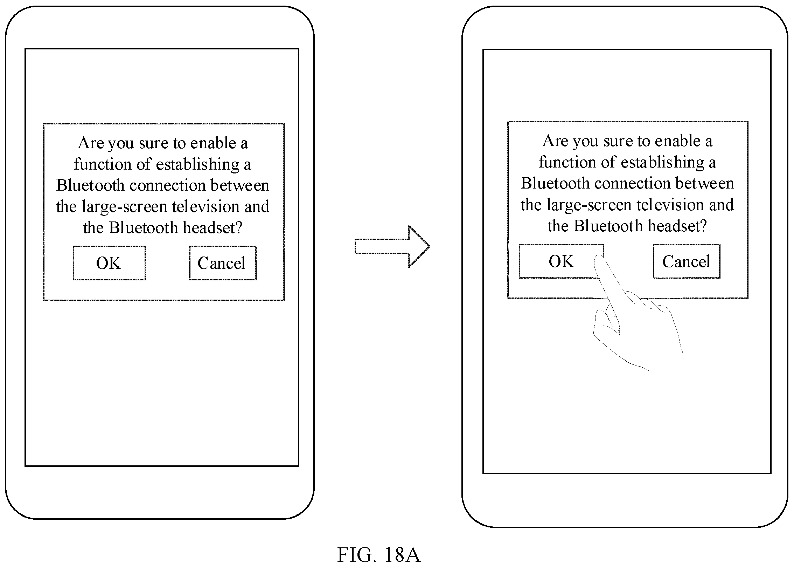

In some embodiments, after the mobile phone establishes the Bluetooth connection to the Bluetooth headset, the display of the mobile phone may output a prompt box, as shown in FIG. 18A, to prompt the user whether to enable a function of establishing a Bluetooth connection between the large-screen television and the Bluetooth headset.

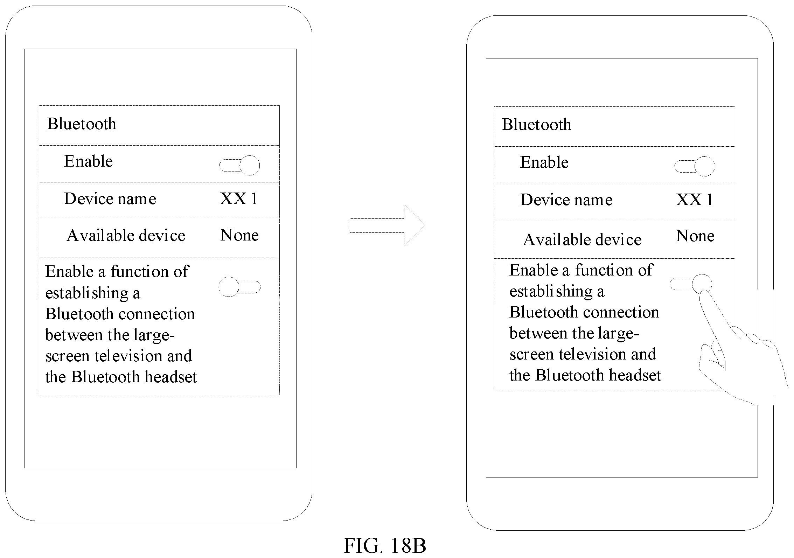

In some embodiments, a function item for establishing a Bluetooth connection between a large-screen television and a Bluetooth headset may be added to a Bluetooth settings user interface of the mobile phone. As shown in FIG. 18B, when establishing a Bluetooth connection between the Bluetooth headset and the mobile phone, the user may choose whether to enable the function.

Certainly, the mobile phone may alternatively output the third prompt information in another manner. For example, the third prompt information may be output in a voice manner, which is not limited herein.

S 1705: The mobile phone detects an OK operation of the user, and sends state indication information to the Bluetooth headset, where the state indication information is used to indicate the Bluetooth headset to turn to a pairing state.

After the mobile phone outputs the prompt information, the user may determine, by performing a touch operation on the mobile phone, whether to enable the function of establishing a Bluetooth connection between the large-screen television and the Bluetooth headset. For example, in FIG. 18A, if the user touches an OK button in a prompt box of the mobile phone, the mobile phone detects the OK operation of the user, which may be referred to as a fifth operation, and sends the state indication information to the Bluetooth headset. In FIG. 18B, the user may adjust an enabled state or a disabled state of the function item to select. For example, when a circular button is located on the left side of a bar frame, it indicates the disabled state; and when the circular button is located on the right side of the bar frame, it indicates the enabled state. In this case, the user touches the circular button, so that the circular button is on the right side of the bar frame, and the mobile phone detects the OK operation of the user, to send the state indication information to the Bluetooth headset.

In this embodiment of this application, the state indication information may be a data packet including a specified packet or packet header. After obtaining the specified packet or packet header, the Bluetooth headset may turn to the pairing state based on the specific packet or packet header. Alternatively, the state indication information may alternatively be information pre-agreed on by the mobile phone and the Bluetooth headset, and the pre-agreed information is used to indicate the Bluetooth headset to turn to the pairing state. Certainly, the state indication information may alternatively be in another form. This is not limited herein.

It should be noted that the pairing state indicated by the state indication information may be the pairable and discoverable state in step S603, or may be the pairable and undiscoverable state in step S603, which is not limited herein.

S1706: The Bluetooth headset turns to the pairing state based on the state indication information.

After receiving the state indication information, the Bluetooth headset may turn to the pairing state indicated by the state indication information. For example, when the state indication information indicates the Bluetooth headset to turn to the foregoing pairable and discoverable state, the Bluetooth headset controls the Bluetooth headset to be in the pairable and discoverable state; or when the state indication information indicates the Bluetooth headset to turn to the foregoing pairable and undiscoverable state, the Bluetooth headset controls the Bluetooth headset to be in the pairable and undiscoverable state.

It should be noted that, step S1704 to step S1706 are performed when the Bluetooth headset is not in the pairing state after the mobile phone establishes the Bluetooth connection to the Bluetooth headset. In some embodiments, after step S1703 is performed, that is, the Bluetooth connection between the mobile phone and the Bluetooth headset is established, the Bluetooth headset may alternatively be in the pairing state. In this case, step S 1704 to step S 1706 may not be performed. In some embodiments, after step S1703 is performed, that is, the Bluetooth connection between the mobile phone and the Bluetooth headset is established, the Bluetooth headset is not in the pairing state, but the mobile phone may enable, by default, the function of establishing a Bluetooth connection between the large-screen television and the Bluetooth headset. In this case, step S1704 may not be performed, and the mobile phone directly sends fifth indication information to the Bluetooth headset, to indicate the Bluetooth headset to turn to the pairing state.

S1707: The mobile phone broadcasts Bluetooth information or scans Bluetooth information.

When the mobile phone indicates the Bluetooth to turn to the pairing state or the mobile phone determines to enable the function of establishing a Bluetooth connection between the large-screen television and the Bluetooth headset, the mobile phone may broadcast the Bluetooth information or scan the Bluetooth information.

In some embodiments, the mobile phone may periodically broadcast the Bluetooth information. In this embodiment of this application, the Bluetooth information may be understood as Bluetooth information sent by the mobile phone as an agent of the Bluetooth headset instead of a Bluetooth headset. For example, after the Bluetooth connection is established between the mobile phone and the Bluetooth headset, the mobile phone may store related information of the Bluetooth headset. The related information includes information such as a Bluetooth address, a name, and a unique identifier, and the Bluetooth information may include the related information of the Bluetooth headset stored in the mobile phone.

In some embodiments, after the Bluetooth function of the large-screen television is enabled, the large-screen television may continuously send the Bluetooth broadcast in step S601 at a specified frequency at a preset period, so that the Bluetooth broadcast is scanned and obtained by another electronic device. After detecting the Bluetooth broadcast of the large-screen television, the mobile phone may send, to the large-screen television, the related information of the Bluetooth headset connected to the mobile phone. In FIG. 17, an example in which the mobile phone sends a Bluetooth broadcast is used.

S1708: The large-screen television discovers the Bluetooth headset.

S1709: The large-screen television sends first indication information to the remote control, where the first indication information is used to indicate the remote control to enable Bluetooth scanning, and the remote control receives the first indication information.

S1710: The remote control detects the Bluetooth information sent by the mobile phone, and determines whether the Bluetooth broadcast meets a preset condition.

In this embodiment of this application, the preset condition is to determine whether signal strength of the Bluetooth broadcast is greater than or equal to a third threshold. When the signal strength of the Bluetooth broadcast is greater than or equal to the third threshold, it indicates that the mobile phone is within a preset distance of the remote control. The third threshold may be the same as or different from the first threshold, and may be specifically set by a skilled person based on a use requirement. A value relationship between the third threshold and the second threshold is similar to a value relationship between the first threshold and the second threshold, and is not limited herein.

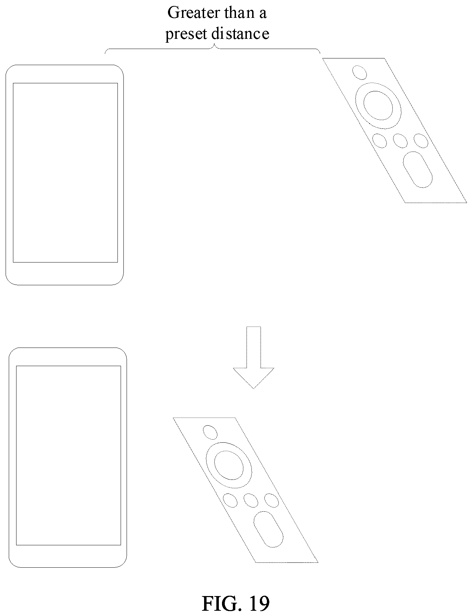

In some embodiments, when the remote control is in a Bluetooth scanning state, a distance between the remote control and the mobile phone may be adjusted, so that the remote control detects the Bluetooth information. For example, refer to FIG. 19. The user may move the remote control close to the mobile phone, for example, move the remote control 5 cm away from the mobile phone. After detecting the Bluetooth information sent by the mobile phone, the remote control may determine whether a detected RSSI of the Bluetooth information is greater than or equal to a threshold, to determine whether the Bluetooth broadcast meets a preset condition, where when the RSSI is greater than or equal to the threshold, it is determined that the Bluetooth broadcast meets the preset condition.

In some embodiments, before the remote control is in the Bluetooth scanning state, or when the Bluetooth headset turns to the pairing state, the user may move the mobile phone close to the remote control, and adjust a distance between the remote control and the mobile phone. In this way, when the remote control performs Bluetooth scanning, the Bluetooth information sent by the mobile phone can be detected.

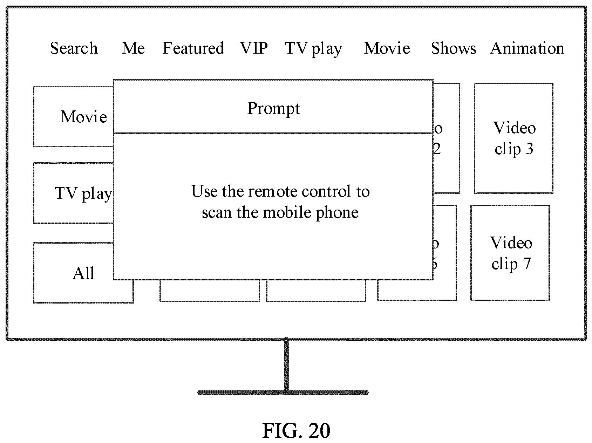

In some embodiments, the user may alternatively place the remote control close to the mobile phone based on a prompt of the large-screen television. For example, after detecting the Bluetooth information sent by the mobile phone, the large-screen television may output prompt information on the display of the large-screen television. As shown in FIG. 20, the large-screen television displays "Use the remote control to scan the mobile phone" on the display. In this way, the user can move the remote control close to the mobile phone based on the prompt information.

In some embodiments, after the large-screen television establishes the Bluetooth connection to the remote control, the large-screen television may send second indication information to the remote control, where the second indication information is used to indicate the remote control to determine, after scanning and obtaining a Bluetooth broadcast of another electronic device, whether the another electronic device is within the preset distance of the remote control. Therefore, after detecting a Bluetooth broadcast sent by the Bluetooth headset, the remote control determines, based on the second indication information, whether the Bluetooth headset is within the preset distance.

S1711: If the remote control determines that the Bluetooth broadcast meets the preset condition, the remote control sends pairing indication information to the large-screen television, and the large-screen television receives the pairing indication information.

S1712: The large-screen television establishes a Bluetooth connection to the Bluetooth headset.

S1713: The Bluetooth headset stops periodically sending Bluetooth information or scanning Bluetooth information.

S1714: The large-screen television stops periodically sending Bluetooth information or scanning Bluetooth information.

S 1715: The large-screen television sends second indication information to the remote control, where the second indication information is used to indicate the remote control to disable the Bluetooth scanning function.

Step S1711 to step S1715 are similar to step S607 to step S611, and details are not described herein again.

In the embodiment shown in FIG. 15, the pairing connection between the Bluetooth headset and the large-screen television are implemented by using a Bluetooth component. In another example, a pairing connection between the Bluetooth headset and the large-screen television may alternatively be implemented through NFC. This manner is described below in detail with reference to the accompanying drawings.

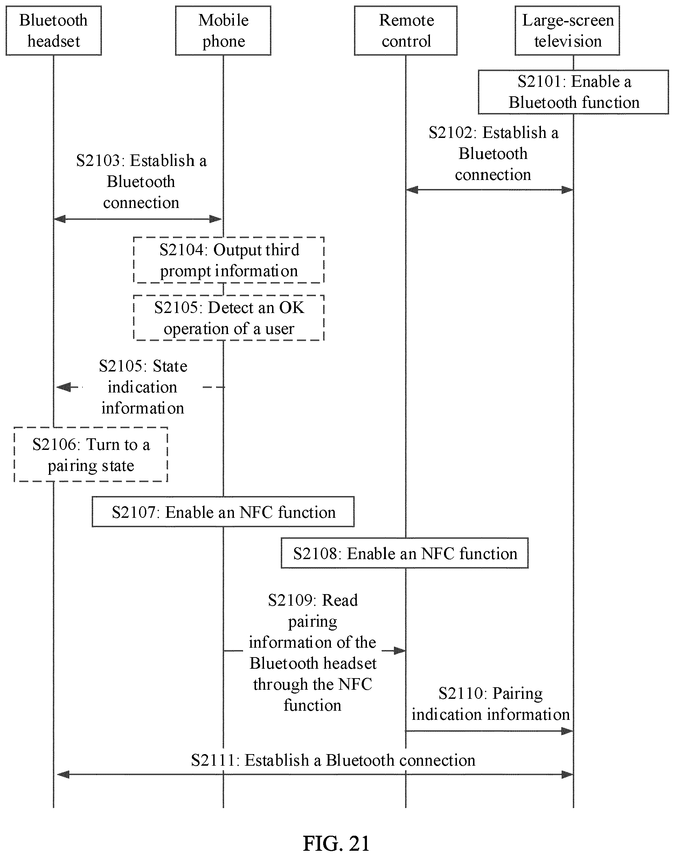

FIG. 21 is yet another example flowchart of a communication method for multi-device Bluetooth pairing according to an embodiment of this application. The method may be applied to the communication system shown in FIG. 1B. For ease of description, in the following embodiment, an example is used in which the first Bluetooth device 100 shown in FIG. 5 is a mobile phone, the large-screen electronic device 200 shown in FIG. 3 is a large-screen television, the second Bluetooth device 300 shown in FIG. 4 is a remote control, and the third Bluetooth device shown in FIG. 2 is a Bluetooth headset. The flowchart is described as follows:

S2101: The large-screen television enables a Bluetooth function.

S2102: The large-screen television establishes a Bluetooth connection to the remote control.

Step S2101 and step S2102 are similar to step S601 and step S602, and details are not described herein again.

S2103: The Bluetooth headset establishes a Bluetooth connection to the mobile phone.

Step S2103 is similar to step S2102, and details are not described herein again.

It should be noted that, in this embodiment of this application, an execution sequence of step S2101 to step S2103 is not limited.

S2104: The mobile phone outputs third prompt information, where the third prompt information is used to indicate whether to enable a function of establishing a Bluetooth connection between the large-screen television and the Bluetooth headset.

S2105: The mobile phone detects an OK operation of a user, and sends state indication information to the Bluetooth headset, where the state indication information is used to indicate the Bluetooth headset to turn to a pairing state.

S2106: The Bluetooth headset turns to the pairing state based on the state indication information.

Step S2104 to step S2106 are similar to step S1704 to step S1706, and details are not described herein again. In addition, step S2104 to step S2106 are optional steps, that is, after the Bluetooth headset establishes the Bluetooth connection to the mobile phone, the mobile phone may automatically enable an NFC function, and the Bluetooth headset may also keep the pairing state. In FIG. 21, step S2104 to step S2106 are represented by dashed lines.

S2107: The mobile phone enables the NFC function.

S2108: The remote control enables the NFC function.

Step S2107 and step S2108 are similar to step S1503 and step S1504, and details are not described herein again.

S2109: The remote control reads pairing information of the Bluetooth headset through the NFC function.

In some embodiments, after the remote control enables the NFC function, a radio frequency field may be generated. After the user moves the remote control close to the mobile phone, the mobile phone may generate a response message under the action of the radio frequency field. After detecting the response message, the remote control establishes a connection to the mobile phone, and then reads, from the mobile phone, the pairing information of the Bluetooth headset that has established the Bluetooth connection. In this case, the response message generated by the mobile phone is Bluetooth information.

In some embodiments, a tag TAG is set in the mobile phone. After the Bluetooth connection is established between the mobile phone and the Bluetooth headset, the pairing information of the Bluetooth headset may be written into the tag TAG. When the remote control touches the mobile phone, the remote control may read the pairing information of the Bluetooth headset from the tag TAG. In this case, information obtained by the remote control from the tag TAG is Bluetooth information, and the touch operation may be referred to as a fourth operation. Content of the pairing information is similar to the pairing information in step S607, and details are not described herein again.

S2110: The remote control sends pairing indication information to the large-screen television, and the large-screen television receives the pairing indication information.

S2111: The large-screen television establishes a Bluetooth connection to the Bluetooth headset.

Step S2107 and step S2108 are similar to step S1507 and step S1408, and details are not described herein again.

In the embodiment shown in FIG. 21, the remote control obtains the pairing information of the Bluetooth headset through NFC and sends the pairing information to the large-screen television, and the large-screen television initiates a pairing connection. In some embodiments, the Bluetooth headset may alternatively initiate the pairing connection. This manner is described below in detail with reference to the accompanying drawings.

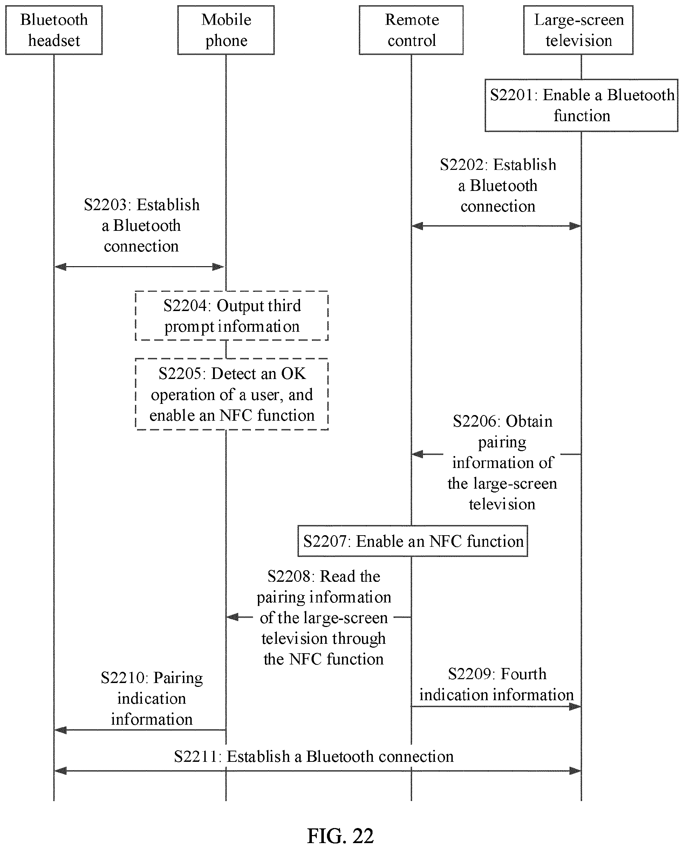

FIG. 22 is yet still another example flowchart of a communication method for multi-device Bluetooth pairing according to an embodiment of this application. The method may be applied to the communication system shown in FIG. 1B. For ease of description, in the following embodiment, an example is used in which the first Bluetooth device 100 shown in FIG. 5 is a mobile phone, the large-screen electronic device 200 shown in FIG. 3 is a large-screen television, the second Bluetooth device 300 shown in FIG. 4 is a remote control, and the third Bluetooth device shown in FIG. 2 is a Bluetooth headset. The flowchart is described as follows:
S2201: The large-screen television enables a Bluetooth function.
S2202: The large-screen television establishes a Bluetooth connection to the remote control.

Step S2201 and step S2202 are similar to step S601 and step S602, and details are not described herein again.

S2203: The Bluetooth headset establishes a Bluetooth connection to the mobile phone.

Step S2203 is similar to step S2202, and details are not described herein again.

It should be noted that, in this embodiment of this application, an execution sequence of step S2201 to step S2203 is not limited.

S2204: The mobile phone outputs third prompt information, where the third prompt information is used to indicate whether to enable a function of establishing a Bluetooth connection between the large-screen television and the Bluetooth headset.

Step S2204 is similar to step S2104, and details are not described herein again.

S2205: The mobile phone detects an OK operation of a user, and enables an NFC function.

After detecting the OK operation of the user, the mobile phone may start the NFC function of the mobile phone. It should be noted that step S2204 is an optional step, that is, after the mobile phone establishes the Bluetooth connection to the Bluetooth headset, the mobile phone may automatically enable the NFC function.

S2206: The remote control obtains pairing information of the large-screen television.

After the remote control establishes the Bluetooth connection to the large-screen television, the remote control may store the pairing information of the large-screen television, where the pairing information may include information such as a Bluetooth address, a name, and a unique identifier of the large-screen television. Alternatively, after the remote control establishes the Bluetooth connection to the large-screen television, the remote control may send a request for obtaining pairing information to the large-screen television, and the large-screen television responds to the request, to send the pairing information of the large-screen television to the remote control. Definitely, the remote control may alternatively obtain the pairing information of the large-screen television in another manner, which is not limited herein.

S2207: The remote control enables an NFC function.

Step S2207 is similar to step S1503, and details are not described herein again. In addition, in this embodiment of this application, an execution sequence of step S2206 and step S2207 is not limited.

S2208: The mobile phone reads the pairing information of the large-screen television through the NFC function.

In an example, after the mobile phone enables the NFC function, a radio frequency field may be generated. After the user moves the remote control close to the mobile phone, the remote control generates a response message under action of the radio frequency field. After detecting the response message, the mobile phone establishes a connection to the remote control, and then reads the pairing information of the large-screen television from the remote control.

In another example, a TAG tag is set in the remote control, and the TAG tag includes the pairing information of the large-screen television. When the remote control touches the mobile phone, the mobile phone may read the pairing information of the large-screen television from the TAG tag. The tag is preset.

S2209: The remote control sends fourth indication information to the large-screen television, where the fourth indication information is used to indicate the large-screen television to be in a pairing state.

It should be understood that the pairing state of the large-screen television set may be a pairable and discoverable state. In this way, another electronic device can scan and obtain a Bluetooth broadcast sent by the large-screen television set. Alternatively, the pairing state of the large-screen television set may be a pairable and undiscoverable state, that is, another electronic device except the Bluetooth headset cannot scan and obtain a Bluetooth broadcast sent by the large-screen television set, so as to prevent a misconnection.

In this embodiment of this application, an execution sequence of step S2208 and step S2209 is not limited.

S2210: The mobile phone sends pairing indication information to the Bluetooth headset.

The pairing indication information includes the pairing information of the large-screen television. After obtaining the pairing information of the large-screen television from the remote control through the NFC function, the mobile phone may send the pairing information of the large-screen television to the Bluetooth headset through the pairing indication information, so that the Bluetooth headset initiates a Bluetooth connection to the large-screen television.

S2211: The large-screen television establishes the Bluetooth connection to the Bluetooth headset.

Step S2211 is similar to step S608, and details are not described herein again.

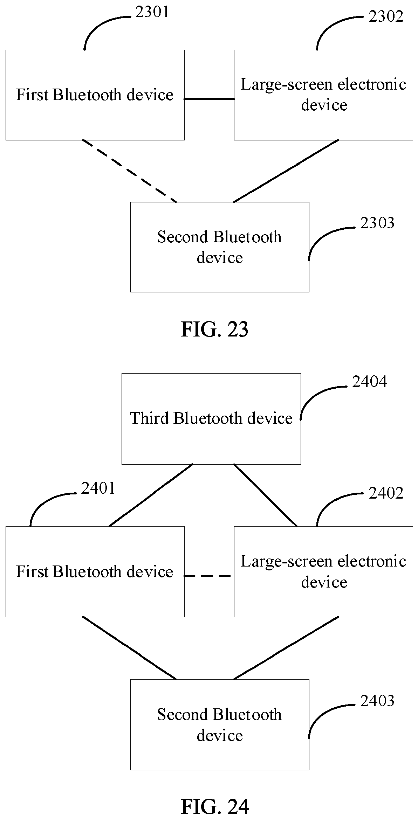

Based on a same technical concept, an embodiment of this application further provides a communication system for multi-device Bluetooth pairing. Refer to FIG. 23. The communication system includes a first Bluetooth device 2301, a large-screen electronic device 2302, and a second Bluetooth device 2303. The second Bluetooth device 2303 is connected to the large-screen electronic device 2302 through Bluetooth. The first Bluetooth device 2301 is configured to perform the method performed by the Bluetooth headset in the embodiment shown in FIG. 6 or FIG. 15. The large-screen electronic device 2302 is configured to execute the method executed by the large-screen television in the embodiment shown in FIG. 6 or FIG. 15, and the second Bluetooth device 2303 is configured to execute the method executed by the remote control in the embodiment shown in FIG. 6 or FIG. 15.

Based on a same technical concept, an embodiment of this application further provides a communication system for multi-device Bluetooth pairing. Refer to FIG. 24. The communication system includes a first Bluetooth device 2401, a large-screen electronic device 2402, a second Bluetooth device 2403, and a third Bluetooth device 2404. The second Bluetooth device 2403 is connected to the large-screen electronic device 2402 through Bluetooth. The first Bluetooth device 2401 is configured to perform the method performed by the mobile phone in the embodiment shown in FIG. 21 or FIG. 22. The large-screen electronic device 2402 is configured to execute the method executed by the large-screen television in the embodiment shown in FIG. 21 or FIG. 22. The second Bluetooth device 2403 is configured to execute the method executed by the remote control in the embodiment shown in FIG. 21 or FIG. 22. The third Bluetooth device 2404 is configured to execute the method executed by the Bluetooth headset in the embodiment shown in FIG. 21 or FIG. 22.

Based on a same technical concept, an embodiment of this application further provides a computer-readable storage medium, including a program or instructions. When the program or the instructions are run on a computer, the method performed in the embodiment shown in FIG. 6, FIG. 15, FIG. 21, or FIG. 22 is performed.

Based on a same technical concept, an embodiment of this application further provides a chip. The chip is coupled to a memory, and is configured to read and execute program instructions stored in the memory, so that the method performed in the embodiment shown in FIG. 6, FIG. 15, FIG. 21, or FIG. 22 is performed.

Based on a same technical concept, an embodiment of this application further provides a computer program product, including instructions. When the instructions are run on a computer, the method performed in the embodiment shown in FIG. 6, FIG. 15, FIG. 21, or FIG. 22 is performed.

Terms used in the foregoing embodiments are merely for a purpose of describing specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. Terms "comprise", "include", "have", and variations thereof all mean "including but not limited to", unless otherwise specifically emphasized.

In the embodiments provided in this application, the method provided in the embodiments of this application is described from the perspective in which the mobile device (for example, the mobile phone) is used as an execution body. To implement functions in the foregoing method provided in embodiments of this application, the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

According to the context, the term "when..." used in the foregoing embodiments may be interpreted as a meaning of "if...", "after...", "in response to determining...", or "in response to detecting...". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

It should be noted that a part of this patent application document includes copyright-protected content. The copyright owner reserves the copyright except copies are made for the patent documents or the recorded content of the patent documents in the Patent Office.

## Claims

1. A communication system for multi-device Bluetooth pairing, wherein the communication system comprises a first Bluetooth device, a large-screen electronic device, and a second Bluetooth device, and the second Bluetooth device is connected to the large-screen electronic device through Bluetooth;
the first Bluetooth device is configured to: receive a first operation, and send Bluetooth information in response to the first operation;
the second Bluetooth device is configured to: receive the Bluetooth information; and when signal strength of the Bluetooth information is greater than or equal to a first threshold, send pairing indication information to the large-screen electronic device through the Bluetooth connection; and
the large-screen electronic device is configured to: receive the pairing indication information; and establish a Bluetooth connection to the first Bluetooth device in response to the pairing indication information.

2. The communication system according to claim 1, wherein the first operation is an operation of enabling a Bluetooth function of the first Bluetooth device.

3. The communication system according to claim 1 or 2, wherein the Bluetooth information comprises information of the first Bluetooth device:

4. The communication system according to any one of claims 1 to 3, wherein the first threshold is greater than a second threshold, and when the large-screen electronic device determines that the signal strength of the Bluetooth information is greater than or equal to the second threshold, the large-screen electronic device can receive the Bluetooth information.

5. The communication system according to claim 4, wherein before the second Bluetooth device receives the Bluetooth information, the large-screen electronic device is further configured to send first indication information to the second Bluetooth device; and the second Bluetooth device is further configured to: receive the first indication information, and perform Bluetooth scanning in response to the first indication information.

6. The communication system according to claim 5, wherein before the large-screen electronic device sends the first indication information, the large-screen electronic device is further configured to:
receive the Bluetooth information, and generate and output first prompt information in response to the Bluetooth information, wherein the first prompt information is used to indicate whether to perform a Bluetooth connection to the first Bluetooth device; and
receive a second operation, and send the first indication information in response to the second operation.

7. The communication system according to any one of claims 1 to 6, wherein before the large-screen electronic device establishes the Bluetooth connection to the first Bluetooth device, the large-screen electronic device is further configured to:
generate and output second prompt information, wherein the second prompt information is used to indicate whether to perform a Bluetooth connection to the first Bluetooth device; and
receive a third operation, and establish the Bluetooth connection to the first Bluetooth device in response to the third operation.

8. The communication system according to any one of claims 1 to 7, wherein the pairing indication information comprises one or more of a name, a unique identifier, or a Bluetooth address of the first Bluetooth device.

9. The communication system according to claim 5 or 6, wherein after the large-screen electronic device establishes the Bluetooth connection to the first Bluetooth device, the large-screen electronic device is further configured to send second indication information to the second Bluetooth device, wherein the second indication information is used to indicate the second Bluetooth device to stop Bluetooth scanning.

10. A communication method for multi-device Bluetooth pairing, wherein the method is applied to a communication system, the communication system comprises a first Bluetooth device, a large-screen electronic device, and a second Bluetooth device, the second Bluetooth device is connected to the large-screen electronic device through Bluetooth, and the method comprises:
receiving, by the first Bluetooth device, a first operation, and sending Bluetooth information in response to the first operation;
receiving, by the second Bluetooth device, the Bluetooth information, and when signal strength of the Bluetooth information is greater than or equal to a first threshold, sending pairing indication information to the large-screen electronic device through the Bluetooth connection; and
receiving, by the large-screen electronic device, the pairing indication information, and establishing a Bluetooth connection to the first Bluetooth device in response to the pairing indication information.

11. The method according to claim 10, wherein the first operation is an operation of enabling a Bluetooth function of the first Bluetooth device.

12. The method according to claim 10 or 11, wherein the Bluetooth information comprises information of the first Bluetooth device.

13. The method according to any one of claims 10 to 12, wherein the first threshold is greater than a second threshold, and when the large-screen electronic device determines that the signal strength of the Bluetooth information is greater than or equal to the second threshold, the large-screen electronic device can receive the Bluetooth information.

14. The method according to claim 13, wherein before the second Bluetooth device receives the first information, the large-screen electronic device sends first indication information to the second Bluetooth device; and the second Bluetooth device receives the first indication information, and performs Bluetooth scanning in response to the first indication information.

15. The method according to claim 14, wherein before the large-screen electronic device sends the first indication information, the large-screen electronic device receives the Bluetooth information, and generates and outputs first prompt information in response to the Bluetooth information, wherein the first prompt information is used to indicate whether to perform a Bluetooth connection to the first Bluetooth device; and
the large-screen electronic device receives a second operation, and sends the first indication information in response to the second operation.

16. The method according to any one of claims 10 to 15, wherein before the large-screen electronic device establishes the Bluetooth connection to the first Bluetooth device, the large-screen electronic device generates and outputs second prompt information, wherein the second prompt information is used to indicate whether to perform a Bluetooth connection to the first Bluetooth device; and
the large-screen electronic device receives a third operation, and establishes the Bluetooth connection to the first Bluetooth device in response to the third operation.

17. The method according to any one of claims 10 to 16, wherein the pairing indication information comprises one or more of a name, a unique identifier, or a Bluetooth address of the first Bluetooth device.

18. The method according to claim 14 or 15, wherein after the large-screen electronic device establishes the Bluetooth connection to the first Bluetooth device, the large-screen electronic device sends second indication information to the second Bluetooth device, wherein the second indication information is used to indicate the second Bluetooth device to stop Bluetooth scanning.

19. A computer-readable storage medium, comprising a program or instructions, wherein when the program or the instructions are run on a computer, the method according to any one of claims 10 to 18 is performed.
